# EUROPEAN PATENT SPECIFICATION

(11) **EP 4 485 251 B1**
(45) Date of publication and mention of the grant of the patent: **02.12.2026**
(21) Application number: 23216560.5
(22) Date of filing: 14.12.2023
(51) Int. Cl.: G06F 21/57, G06F 8/654, G06F 8/65

(54) **SYSTEM AND METHOD FOR AUTHENTICATING EXTENDED SERVICE MICROCODE UPDATES**
SYSTEM UND VERFAHREN ZUR AUTHENTIFIZIERUNG VON ERWEITERTEN DIENSTMIKROCODEAKTUALISIERUNGEN
SYSTÈME ET PROCÉDÉ D'AUTHENTIFICATION DE MISES À JOUR DE MICROCODE DE SERVICE ÉTENDU

(30) Priority: 30.06.2023 US 202318217453
(43) Date of publication of application: 01.01.2025
(73) Proprietor: INTEL Corporation, Santa Clara, CA 95054 (US)
(72) Inventor: Shafi, Hisham, San Jose CA, 95124 (US); Cape, Scott, Portland OR, 97209 (US); Wiedemeier, Jeffrey, Austin TX, 78737 (US)
(74) Representative: Samson & Partner Patentanwälte mbB

(56) References cited:
- US-A1- 2021 103 662
- US-A1- 2021 326 135

## Description

### TECHNICAL FIELD

The disclosure relates generally to computer processors, and, more specifically, an embodiment of the disclosure relates to authenticating extended microcode patching for a processor.

### BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O). It should be noted that the term instruction herein may refer to a macro-instruction, e.g., an instruction that is provided to the processor for execution.

US 2021/0103662 A1 discloses relevant prior art for a restricted deployment of targeted processor firmware updates.

Further relevant prior art is found in US 2021/0326135 A1.

### BRIEF DESCRIPTION OF THE DRAWINGS

The present disclosure is illustrated by way of example and not limitation in the figures of the accompanying drawings, in which like references indicate similar elements and in which:
Figure 1 illustrates a system including a motherboard with a hardware processor according to embodiments of the disclosure.
Figure 2 illustrates a processor core coupled to a cache according to embodiments of the disclosure.
Figure 3 illustrates a processor core according to embodiments of the disclosure.
Figure 4 illustrates a system including a read-only memory, a patch memory, and a cache according to embodiments of the disclosure.
Figures 5A-5C illustrate extended patching in a system including a read-only memory, a patch memory, and a cache according to embodiments of the disclosure.
Figure 6 illustrates extended patching in a system including a read-only memory, a patch memory, a cache, and a system memory according to embodiments of the disclosure.
Figure 7 illustrates extended patching in a system including a patch memory, a cache, and a system memory according to embodiments of the disclosure.
Figure 8 illustrates extended patching in a system including a patch memory, a cache, and a system memory according to embodiments of the disclosure.
Figure 9 illustrates extended patching in a system including a control register, a read-only memory, a patch memory, and a cache according to embodiments of the disclosure.
Figure 10 illustrates a flow diagram for extended patching according to embodiments of the disclosure.
Figure 11 illustrates a flow diagram for extended patching according to embodiments of the disclosure.
Figure 12 illustrates a flow diagram for extended patching according to embodiments of the disclosure.
Figure 13A illustrates a plurality of stages of a processing pipeline;
Figure 13B illustrates details of one embodiment of a core;
Figure 14 illustrates execution circuitry in accordance with one embodiment;
Figure 15 illustrates one embodiment of a register architecture;
Figure 16 illustrates one example of an instruction format;
Figure 17 illustrates addressing techniques in accordance with one embodiment;
Figure 18 illustrates one embodiment of an instruction prefix;
Figures 19A-D illustrate embodiments of how the R, X, and B fields of the prefix are used;
Figures 20A-B illustrate examples of a second instruction prefix;
Figure 21 illustrates payload bytes of one embodiment of an instruction prefix;
Figure 22 illustrates an example development architecture for IP core development;
Figure 23 illustrates instruction conversion and binary translation implementations;
Figure 24 illustrates one embodiment of an architecture for authenticating a microcode patch.
Figure 25 illustrates an example of a microcode update register for extended service authentication.
Figure 26 illustrates a microcode updater in accordance with at least one embodiment.
Figures 27A-B illustrate data structures for associating microcode update period values with different processors.
Figure 28 illustrates a status register for storing an indication of a microcode update failure.
Figure 29 illustrates a method in accordance with embodiments of the invention.

### DETAILED DESCRIPTION

In the following description, numerous specific details are set forth. However, it is understood that embodiments of the disclosure may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

A (e.g., hardware) processor (e.g., having one or more cores) may execute (e.g., user-level) instructions (e.g., a thread of instructions) to operate on data, for example, to perform arithmetic, logic, or other functions. For example, software may include a plurality of instructions (e.g., macro-instructions) that are provided to a processor (e.g., a core or cores thereof) that then executes (e.g., decodes and executes) the plurality of instructions to perform the corresponding operations. In certain embodiments, a processor includes circuity (e.g., a decoder circuit) to translate (e.g., decode) an instruction into one or more micro-operations (µops or micro-ops), for example, with these micro-operations directly executed by the hardware. One or more micro-operations corresponding to an instruction (e.g., macro-instruction) may be referred to as a microcode flow for that instruction. A micro-operation may be referred to as a micro-instruction, for example, a micro-instruction that resulted from a processor's decoding of a macro-instruction. In one embodiment, the instructions are 64 bit and/or 32 bit instructions of an instruction set architecture (ISA). In one embodiment, the instructions are (e.g., 64 bit and/or 32 bit) instructions of an Intel^{®} instruction set architecture (ISA). In certain embodiments, the translation of an instruction into one or more micro-operations is associated with the instruction fetch and decode portion of a processor's pipeline.

In certain (e.g., out-of-order) processors, microcode (e.g., comprising micro-operations) is stored in a read-only memory (ROM) of the processor, for example, with the ROM generally referred to as a microcode ROM or µROM. Reading of microcode (e.g., reading of one or more micro-operations) out of a read-only memory is performed by a microcode sequencer (e.g., microcode sequencer circuit) of the processor. In one embodiment, the data (e.g., micro-operations) in the read-only memory is stored there during the manufacturing process, for example, the data is not modifiable (e.g., when in possession by a consumer). Thus, in certain embodiments, the non-modifiable nature of a read-only memory storing microcode prevents updates to that microcode.

Certain processors include a patch memory that is used to patch one or more micro-operations of the read-only memory. For example, where a processor is to, for an instruction that is to be executed, source a set of micro-operations for the instruction from the patch memory instead of the (e.g., obsolete) set of micro-operations for the instruction stored in the read-only memory. In certain embodiments, the data stored in the patch memory is modifiable (e.g., when in possession by a consumer).

In certain embodiments, the patch memory is within a microcode sequencer circuit (e.g., within a core of the processor) and thus places a practical limit on the size of the available patch memory. In one embodiment, the patch memory stores about 512 micro-operations. In certain embodiments, the read-only memory is within a microcode sequencer circuit and thus places a practical limit on the size of the available read-only memory. In one embodiment, the read-only memory stores about 40,000 micro-operations. As one example, multiple critical functionality or security issues that are to be fixed in the field via microcode patching (e.g., by patching to different micro-operations, which may be referred to as patch micro-code) may include providing a plurality (e.g., of a size greater than the patch memory) of micro-operations, and a fixed storage size (e.g., about 512 micro-operations) of patch memory may result in the inability to patch such critical issues.

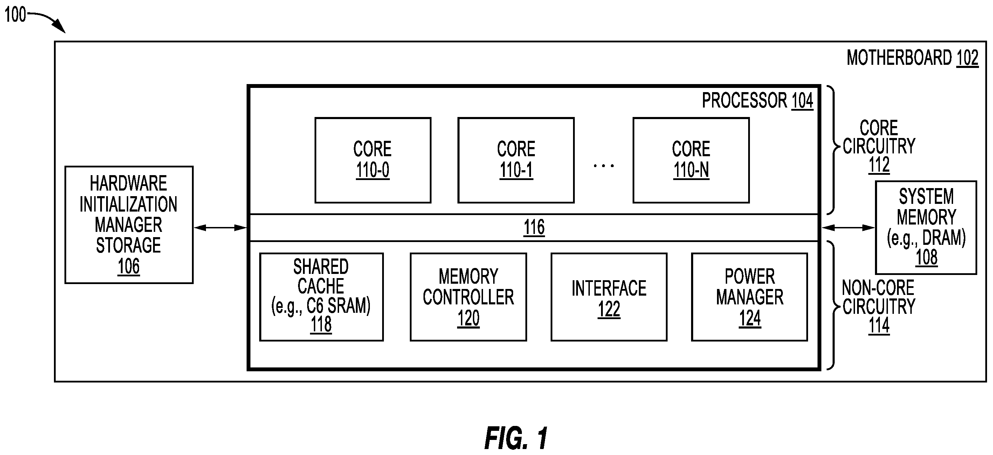

Certain embodiments herein improve the functioning of a processor by extending microcode patching through on-die and off-die (e.g., secure) memory (e.g., storage elements). Certain embodiments herein provide additional storage resources for storing numerous (e.g., a thousand or thousands) of additional micro-operations, for example, micro-operations that are used for patching of critical issues and/or adding innovating features and capabilities after manufacturing (e.g., after product launch). In one embodiment, the additional storage resources used for storing micro-operations are section(s) of a cache that are unused at runtime and/or unused by a configuration (e.g., environment of use) of a processor. For example, the additional storage resources may be a section of a cache that is used to store context information from a core when the core is transitioned to a power state that shuts off voltage to the core. Non-limiting examples of such sections are one or more sections for: storage of context information for a transition of a thread (e.g., when a core supports multi-threading) to idle or off, storage of context information for a transition of a core (e.g., for a multiple core processor) to idle or off, or storage of coherency information for a transition of a cache coherency circuit (e.g., cache box (CBo)) to idle or off. For example, the additional storage resources, of a processor (e.g., core) used in a server configuration that does not utilize a graphics processor, may be a section of a cache that was reserved for storing context information for the graphics thread(s). For example, the additional storage resources, of a processor (e.g., core) that does not implement a virtual machine, may be a section of a cache that was reserved for storing context information for a virtual machine (e.g., a virtual machine control structure (VMCS)). Certain embodiments herein provide for (e.g., non-transitory storage for) enhanced patch code to allow (e.g., secure) use of additional storage resources for microcode patching. Examples of a processor having a core or cores utilizing extended microcode patching are initially discussed below in reference to Figures 1-3.

Figure 1 illustrates a system 100 including a motherboard 102 with a hardware processor 104 according to embodiments of the disclosure. Depicted motherboard 102 includes a processor 104 coupled to hardware initialization manager (non-transitory) storage 106 and system memory 108 (e.g., dynamic random-access memory (DRAM)). In one embodiment, the hardware initialization manager (non-transitory) storage 106 stores hardware initialization manager firmware (e.g., or software). In one embodiment, the hardware initialization manager (non-transitory) storage 106 stores Basic Input/Output System (BIOS) firmware. In another embodiment, the hardware initialization manager (non-transitory) storage 106 stores Unified Extensible Firmware Interface (UEFI) firmware. In certain embodiments (e.g., triggered by the power-on or reboot of a processor), processor 104 executes the hardware initialization manager firmware (e.g., or software) stored in hardware initialization manager (non-transitory) storage 106 to initialize the processor for operation, for example, to begin executing an operating system (OS) and/or initialize and test the (e.g., hardware) components of system 100.

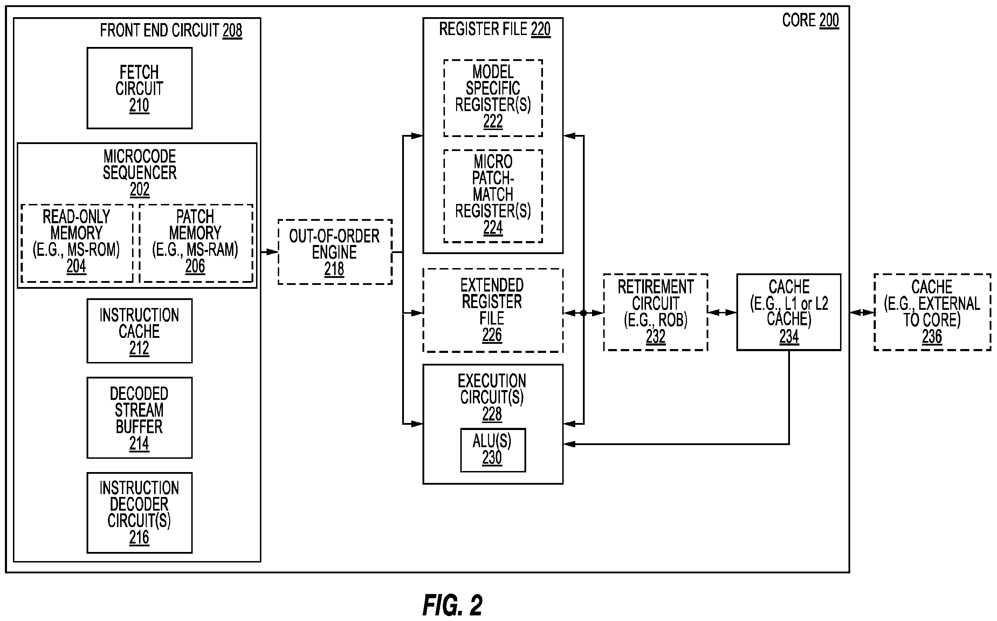

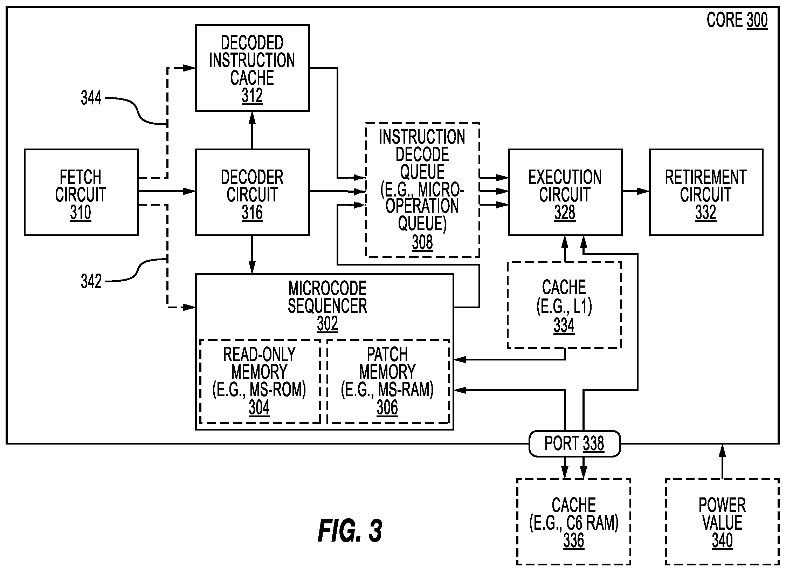

Depicted processor 104 is a multicore processor including core circuitry 112 having a plurality of cores 110_0 to 110_N, where N is any integer. In another embodiment, processor only includes a single core. Cores 110_0 to 110_N may be coupled to each other via interconnect 116 or other electrical coupling. Each core may include the components discussed herein, for example, as shown in Figures 2 or 3. Depicted processor 104 includes non-core circuitry 114 separate from (e.g., outside of) the core circuitry112. Non-core circuitry 114 may include any combination of shared cache 118 (e.g., static random-access memory (SRAM)) (e.g., a last level cache), memory controller 120 (e.g., to maintain cache coherency in caches and/or fetch and retrieve data from system memory 108 or other memory), interface 122 (e.g., to provide a coupling to various components that are not part of processor 104), such as, but not limited to, peripheral devices, mass storage, etc.).

Each core may include its own (e.g., not shared) cache layer inside that core, for example, as shown in Figures 2 and 3. Each core (e.g., and individual components of that core) and/or other components of system 100 may be separately powered, for example, placed into or out of one of multiple power states. In certain embodiments, each power state is power state according to an Advanced Configuration and Power Interface (ACPI) standard (e.g., the Advanced Configuration and Power Interface (ACPI) Specification Revision 5.0A of November 13, 2013). In certain embodiments, there are core states (c-states) for each core and/or processor (or package) states (p-states) for each processor.

Non-limiting examples of p-states are: P0 Performance State where a device or processor is in this state uses its maximum performance capability and may consume maximum power, P1 Performance State where the performance capability of a device or processor is limited below its maximum (e.g., via lower voltage and/or frequency than P0) and consumes less than maximum power, up to the Pn Performance State where the performance capability of a device or processor is at its minimum level and consumes minimal power while remaining in an active state (e.g., where state n is a maximum number and is processor or device dependent). In certain embodiments, processors and devices define support for an arbitrary number of performance states (e.g., not to exceed 16).

Non-limiting examples of c-states are: C0 processor core power state (e.g., the operating power state) where while the processor core is an executing power state, C1 processor core power state where the processor core has a hardware latency low enough that the operating software does not consider the latency aspect of the state when deciding whether to use it (e.g., aside from putting the processor in a nonexecuting power state, this state has no other software-visible effects), C2 processor power state that offers improved power savings over the C1 state (e.g., where the worst-case hardware latency for this state is provided via the ACPI system firmware and the operating software can use this information to determine when the C1 state should be used instead of the C2 state and/or aside from putting the processor core in a non-executing power state, this state has no other software-visible effects), C3 processor core power state that offers improved power savings over the C1 and C2 states. (e.g., where the worst-case hardware latency for this state is provided via the ACPI system firmware and the operating software can use this information to determine when the C2 state should be used instead of the C3 state and/or while in the C3 state, the processor's (e.g., core's) caches maintain state but ignore any snoops. For example, where the operating software is responsible for ensuring that the caches maintain coherency. Additional states may be defined by manufacturers for their processors. As one example, a C6 processor core power state may be used wherein the power (e.g., voltage) to the core is shut off, for example, where entry into the C6 state causes the core state (e.g., context information for the core and/or threads operating on that core) to be saved (e.g., to a dedicated C6 storage section in shared cache 118) before the core is shut off (e.g., core clocks are stopped and/or core voltage is reduced to zero Volts). As another example, a C7 processor core power state may be used that includes the C6 state changes but also where a last level cache (e.g., shared cache 118) is flushed. In one embodiment, power manager 124 (e.g., circuit) controls the power levels of the components of system 100 (e.g., cores), e.g., according to a power state. In one embodiment, an operating system executing on processor 104 requests the power state changes that are implemented by power manager 124.

A processor (e.g., each core thereof) may include a microcode sequencer. Certain embodiments herein improve the functioning of a processor by extending microcode patching by a microcode sequencer (e.g., circuit). Turning to Figures 2 and 3, examples of cores are illustrated (e.g., where each core of cores 110_0 to 110_N of Figure 1 is an instance of core 200 in Figure 2 or core 300 in Figure 3).

Figure 2 illustrates a processor core 200 coupled to a cache 236 (e.g., a cache external to the core 200) according to embodiments of the disclosure. In one embodiment, cache 236 includes a dedicated section for storage of context information (e.g., core state, which is different than a core power state) from the core 200 when the core is transitioned (e.g., from an active power state) to a power state (e.g., C6 or C7 power state) that shuts off voltage to the core, but does not shut down the cache 236. Certain embodiments herein utilize cache 236 (e.g., a cache external to the core 200) to extend microcode patching by microcode sequencer 202 (e.g., circuit). Certain embodiments herein utilize the dedicated (e.g., C6 or C7) section of cache 236 (e.g., a cache external to the core 200) to extend microcode patching by microcode sequencer 202 (e.g., circuit). Certain embodiments herein utilize system memory (e.g., system memory 108 in Figure 1) to further extend microcode patching by microcode sequencer 202 (e.g., circuit), for example, by utilizing the system memory to provide further (or back-up) storage for microcode patches for the microcode sequencer 202 (e.g., circuit).

Microcode sequencer 202 may include (i) a read-only memory 204 (ROM) therein (e.g., with the ROM generally referred to as a microcode ROM or microcode sequencer ROM (MS-ROM or MS-µROM)) 204 and/or (ii) a patch memory 206 therein, e.g., with the patch memory generally referred to as microcode sequencer writable memory or microcode sequencer random access memory (MS-RAM or MS-µRAM). In one embodiment, the read-only memory 204 of microcode sequencer 202 stores microcode (e.g., comprising micro-operations), for example, with the microcode sequencer 202 (e.g., microcode sequencer circuit) reading one or more micro-operations out of the read-only memory 204 in response to a request for those one or more micro-operations for the instruction (e.g., macro-instruction). In one embodiment, the micro-operations in the read-only memory 204 are stored there during the manufacturing process, for example, such that the data is not modifiable (e.g., when in possession by a consumer). Thus, in certain embodiments, the non-modifiable nature of a read-only memory storing microcode prevents updates to that microcode.

Certain processors include a patch memory 206 that is used to patch one or more micro-operations of the read-only memory 204. For example, where a processor is to, for an instruction that is to be executed, source a set of micro-operations for the instruction from the patch memory 206 instead of the (e.g., obsolete) set of micro-operations for the instruction stored in the read-only memory 204. In certain embodiments, the data stored in the patch memory 206 is modifiable (e.g., when in possession by a consumer).

Depicted core 200 includes front end circuit 208, which may be used to perform instruction fetch and to translate (e.g., decode) a fetched instruction into one or more micro-operations (µops or micro-ops), for example, with these micro-operations directly executed by the execution circuit(s) 228. Front end circuit 208 may include any combination of: fetch circuit 210 to fetch instructions that were requested for execution (e.g., by software), microcode sequencer 202 (e.g., that utilizes extended patching as disclosed herein), an instruction cache 212 (for example, that stores macro-instructions, e.g., as a backing store of instruction bytes), a decoded stream buffer 214 (e.g., decoded instruction cache) (e.g., to provide a stream of micro-operations for an instruction), and an instruction decoder circuit 216 (e.g., to perform decode operations to decode an instruction into micro-operation(s)). In one embodiment, the instruction decoder circuit 216 includes a plurality of instruction inputs and concurrently determines a set of one or more micro-operations for each instruction. In one embodiment, there are a first proper subset of the plurality of inputs of decoder circuit 216 that decode all instructions up to a certain number of micro-operations for each set (e.g., decode all instruction up to having 2, 3, 4, 5, 6, 7, 8, 9, 10, or any other number of micro-operations) and/or a second proper subset of the plurality of inputs of decoder circuit 216 that decode all instructions up to a different number of micro-operations for each set (e.g., decode only instructions that have a single micro-operation in their set). In certain embodiments, instructions having a set of micro-operations greater than a threshold number (e.g., 2, 3, 4, 5, 6, 7, 8, 9, 10, or any other number of micro-operations) are sent to the microcode sequencer 202 for it to determine the set of micro-operations for each instruction. Front end circuit 208 may include a queue for micro-operations at an output of the front end circuit 208. An instruction may be identified by its opcode, e.g., as discussed below. Decoded stream buffer 214 (e.g., decoded instruction cache) may receive an instruction (e.g., an opcode for that instruction) from a branch predictor circuit (e.g., branch predictor unit).

In certain embodiments, fetch circuit 210 fetches instructions (e.g., from memory or instruction cache 212) and feeds them to instruction decoder circuit 216 to decode them into micro-operations (e.g., primitives) for execution by the execution circuit(s) 228. In certain embodiments, microcode sequencer 202 interfaces with one or more of the various front end components to initiate and handle microcode fetches from wherever the microcode is stored, e.g., when the instruction decoder circuit 216 does not decode a given instruction. Streaming buffer 214 may be used to interface with a memory hierarchy to enable the fetch of instructions that miss in instruction cache 212. In one embodiment, an instruction is provided to the decoder circuit 216, which then causes a search of the decoded stream buffer 214 for the set of one or more micro-operations for that instruction. Additionally or alternatively, an instruction is provided to the decoder circuit 216, which (for example, when the set of micro-operations for that instruction are to exceed a threshold number or when the instruction is an instruction that is to be patched, e.g., with this information determined from a table of the circuitry for the instructions) then causes the microcode sequencer 202 to search for the set of one or more micro-operations. After the instruction is translated (e.g., decoded) into its set of one or more micro-operations, it is then sent to the execution circuit(s) 228 for execution in certain embodiments.

In Figure 2, an optional out-of-order (OoO) engine 218 (e.g., circuit) is coupled between front end circuit 208 and execution circuits circuit(s) 228 (e.g., execution unit(s)). Out-of-order engine 218 may be used to receive the micro-operations and prepare them for execution. In one embodiment, out-of-order engine 218 may include various buffers to reorder micro-operation flow and allocate various resources used for execution, as well as to provide renaming of logical registers onto storage locations within various register files such as register file 220 and extended register file 226. Register file 220 may include separate register files for integer and floating-point operations. Register file 220 may include model specific register(s) 222 and/or micro patch-match register(s) 224. In one embodiment, model specific register(s) 222 are used as control registers, for example, to control operation of a core (e.g., to control operation of the microcode sequencer 202). Extended register file 226 may provide storage for vector data, e.g., 256 or 512 bits per register.

Various resources may be present in execution circuits 228, including, for example, one or more integer, floating point, or single instruction multiple data (SIMD) execution stacks (e.g., execution units), and/or other specialized hardware. For example, such execution circuits 228 may include one or more arithmetic logic units (ALUs) 230. In certain embodiments, results are provided to retirement circuit 232 (e.g., reorder buffer (ROB)). In one embodiment, retirement circuit 232 includes various arrays and circuitry to receive information associated with each instruction that is executed, and this information is then examined to determine whether the instruction can be validly retired and the resultant data committed to the architectural state of the processor, e.g., or whether one or more exceptions occurred that prevent a proper retirement of the instruction. Retirement circuit 232 may handle other operations associated with retirement.

In certain embodiments, the resultant data is saved into cache 234 of core 200 (e.g., as level 1 (L1) cache or level 2 (L2) cache) and/or into cache 236 separate from the core (for example, as a cache shared by multiple cores, e.g., shared L2 or shared level 3 (L3) cache). In one embodiment, a cache shared by multiple cores is powered separately from the cores, e.g., so that a single core may be powered down without powering down the shared cache (e.g., and thus not deleting the data stored in the shared cache).

In certain embodiments, an in-program order core 200 fetches instructions and decodes them into micro-operations (micro-ops) to feed the next pipeline stages with a continuous stream of micro-operations from the (e.g., most likely) path that the program will execute. In certain embodiments, an out-of-program-order core 200 includes an out-of-order engine 218 that reorders micro-ops to dataflow order so they can execute as soon as their sources (e.g., input operands) are ready and execution resources are available and retirement circuit 232 ensures that the results of execution of the micro-ops, including any exceptions they may have encountered, are visible according to the original program order.

Figure 3 illustrates a processor core 300 according to embodiments of the disclosure. In one embodiment, cache 336 includes a dedicated section for storage of context information (e.g., core state, which is different than a core power state) from the core 300 (e.g., via port 338) when the core is transitioned (e.g., from an active power state) to a power state (e.g., C6 or C7 power state) that shuts off voltage to the core, but does not shut down the cache 336. In one embodiment, a power manager (e.g., power manager 124 in Figure 1) provides a power value 340 to core to set the core into a power level (e.g., to turn on, lower without shutting off, and/or shut off power to the core).

Certain embodiments herein utilize cache 336 (e.g., a cache external to the core 300) to extend microcode patching by microcode sequencer 302 (e.g., circuit). Certain embodiments herein utilize the dedicated (e.g., C6 or C7) section of cache 336 (e.g., a cache external to the core 300) to extend microcode patching by microcode sequencer 302 (e.g., circuit). Certain embodiments herein utilize system memory (e.g., system memory 108 in Figure 1) to further extend microcode patching by microcode sequencer 302 (e.g., circuit), for example, by utilizing the system memory to provide further (or back-up) storage for microcode patches for the microcode sequencer 302 (e.g., circuit).

Microcode sequencer 302 may include (i) a read-only memory 304 (ROM) therein (e.g., with the ROM generally referred to as a microcode ROM or microcode sequencer ROM (MS-ROM or MS-µROM)) 304 and/or (ii) a patch memory 306 therein (e.g., with the patch memory generally referred to as microcode sequencer writable memory or microcode sequencer random access memory (MS-RAM or MS-µRAM). In one embodiment, the read-only memory 304 of microcode sequencer 302 stores microcode (e.g., comprising micro-operations), for example, with the microcode sequencer 302 (e.g., microcode sequencer circuit) reading one or more micro-operations out of the read-only memory 304 in response to a request for those one or more micro-operations for the instruction (e.g., macro-instruction). In one embodiment, the micro-operations in the read-only memory 304 are stored there during the manufacturing process, for example, such that the data is not modifiable (e.g., when in possession by a consumer). Thus, in certain embodiments, the non-modifiable nature of a read-only memory storing microcode prevents updates to that microcode.

Certain processors include a patch memory 306 that is used to patch one or more micro-operations of the read-only memory 304. For example, where a processor is to, for an instruction that is to be executed, source a set of micro-operations for the instruction from the patch memory 306 instead of the (e.g., obsolete) set of micro-operations for the instruction stored in the read-only memory 304. In certain embodiments, the data stored in the patch memory 306 is modifiable (e.g., when in possession by a consumer).

Depicted core 300 includes fetch circuit 310 to fetch instructions that were requested for execution (e.g., by software), microcode sequencer 302 (e.g., that utilizes extended patching as disclosed herein), a decoded instruction cache 312 (for example, that provides a set of micro-operations for an previously decoded instruction), and an instruction decoder circuit 316 (e.g., to perform decode operations to decode an instruction into micro-operation(s)). In one embodiment, the instruction decoder circuit 316 includes a plurality of instruction inputs and concurrently determines a set of one or more micro-operations for each instruction. In one embodiment, there are a first proper subset of the plurality of inputs of decoder circuit 316 that decode all instructions up to a certain number of micro-operations for each set (e.g., decode all instruction up to having 3, 3, 4, 5, 6, 7, 8, 9, 10, or any other number of micro-operations) and/or a second proper subset of the plurality of inputs of decoder circuit 316 that decode all instructions up to a different number of micro-operations for each set (e.g., decode only instructions that have a single micro-operation in their set). In certain embodiments, instructions having a set of micro-operations greater than a threshold number (e.g., 3, 3, 4, 5, 6, 7, 8, 9, 10, or any other number of micro-operations) are sent to the microcode sequencer 302 for it to determine the set of micro-operations for each instruction. Core 300 may include an instruction decode queue 308 (e.g., micro-operation queue) to store micro-operations (e.g., from microcode sequencer 302, decoded instruction cache 312, instruction decoder circuit 316, or any combination thereof) and then input them to execution circuit(s) 328. An instruction may be identified by its opcode, e.g., as discussed below.

Fetch circuit 310 may send a fetched instruction to microcode sequencer 302 (e.g., via line 342), decoded instruction cache 312 (e.g., via line 344), instruction decoder circuit 316, or any combination thereof. In one embodiment, fetch circuit 310 sends a fetched instruction to instruction decoder circuit 316, and instruction decoder circuit 316 sends that instruction to microcode sequencer 302 (e.g., via line 342) and/or decoded instruction cache 312.

Certain arrows indicate two-way communication (e.g., to and from a component), but one-way communication may be used in certain embodiments. Certain arrows indicate one-way communication (e.g., to a component), but two-way communication may be used in certain embodiments.

In certain embodiments, fetch circuit 310 fetches instructions (e.g., from memory or an instruction cache) and feeds them to instruction decoder circuit 316 to decode them into micro-operations (e.g., primitives) for execution by the execution circuit(s) 328. In certain embodiments, microcode sequencer 302 interfaces with one or more of the core components to initiate and handle microcode fetches from wherever the microcode is stored, e.g., when the instruction decoder circuit 316 does not decode a given instruction. In one embodiment, an instruction is provided to the decoder circuit 316, which then causes a search of the decoded instruction cache 312 for the set of one or more micro-operations for that instruction. Additionally or alternatively, an instruction is provided to the decoder circuit 316, which (for example, when the set of micro-operations for that instruction are to exceed a threshold number or when the instruction is an instruction that is to be patched, e.g., with this information determined from a table of the circuitry for the instructions) then causes the microcode sequencer 302 to search for the set of one or more micro-operations. After the instruction is translated (e.g., decoded) into its set of one or more micro-operations, it is then sent (e.g., via optional instruction decode queue 308) to the execution circuit(s) 328 for execution in certain embodiments.

Various resources may be present in execution circuits 328, including, for example, one or more integer, floating point, or single instruction multiple data (SIMD) execution stacks (e.g., execution units), and/or other specialized hardware. For example, such execution circuits 328 may include one or more arithmetic logic units (ALUs). In certain embodiments, results are provided to retirement circuit 332. In one embodiment, retirement circuit 332 includes various arrays and circuitry to receive information associated with each instruction that is executed, and this information is then examined to determine whether the instruction can be validly retired and the resultant data committed to the architectural state of the processor, e.g., or whether one or more exceptions occurred that prevent a proper retirement of the instruction. Retirement circuit 332 may handle other operations associated with retirement.

In certain embodiments, the resultant data is saved into optional cache 334 of core 300 (e.g., as level 1 (L1) cache or level 3 (L2) cache) and/or into cache 336 separate from the core (for example, as a cache shared by multiple cores, e.g., shared L2 or shared level 3 (L3) cache). In one embodiment, cache 336 is powered separately from core 300, e.g., so that core 300 may be powered down without powering down the cache 336 (e.g., and thus not deleting the data stored in the shared cache). An example of how a microcode sequencer utilizes certain storage (e.g., memory and cache) to extend microcode patching.

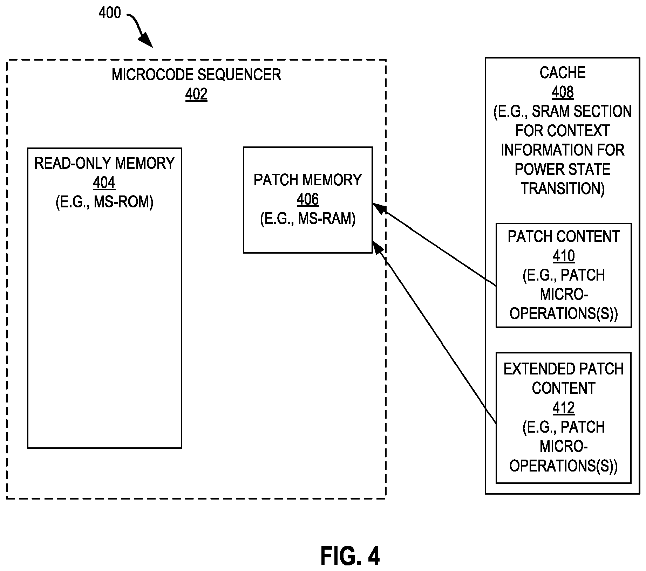

Figure 4 illustrates a system 400 including a read-only memory 404, a patch memory 406, and a cache 408 according to embodiments of the disclosure. In certain embodiments, system 400 utilizes cache 408 to extend microcode patching. In certain embodiments, read-only memory 404 (ROM) (e.g., with the ROM generally referred to as a microcode ROM or microcode sequencer ROM (MS-ROM or MS-µROM)) 404 and/or (ii) a patch memory 406 (e.g., with the patch memory generally referred to as microcode sequencer writable memory or microcode sequencer random access memory (MS-RAM or MS-µRAM) are located within a microcode sequencer 402 (e.g., microcode sequencer circuit) and/or are reserved for exclusive use (e.g., and/or access) by the microcode sequencer 402. In one embodiment, microcode sequencer 402 is an instance of microcode sequencer 202 in Figure 2 or microcode sequencer 302 in Figure 3. In one embodiment, the read-only memory 404 of microcode sequencer 402 stores microcode (e.g., comprising micro-operations), for example, with the microcode sequencer 402 (e.g., microcode sequencer circuit) reading one or more micro-operations out of the read-only memory 404 in response to a request for those one or more micro-operations for an instruction (e.g., macro-instruction). In one embodiment, the micro-operations in the read-only memory 404 are stored there during the manufacturing process, for example, such that the data is not modifiable (e.g., when in possession by a consumer). Thus, in certain embodiments, the non-modifiable nature of a read-only memory storing microcode prevents updates to that microcode. Certain processors include a patch memory 406 that is used to patch one or more micro-operations of the read-only memory 404. For example, where a processor is to, for an instruction that is to be executed, source a set of one or more micro-operations for the instruction from the patch memory 406 instead of the (e.g., now obsolete) set of micro-operations for the instruction stored in the read-only memory 404. In certain embodiments, the data stored in the patch memory 406 is modifiable (e.g., when in possession by a consumer).

In certain embodiments, the patch memory 406 is within a microcode sequencer circuit (e.g., within a core of the processor) and thus places a limit on the size of the available patch memory. In one embodiment, the patch memory 406 stores about 512 micro-operations. In certain embodiments, the read-only memory 404 is within a microcode sequencer circuit and thus places a practical limit on the size of the available read-only memory. In one embodiment, the read-only memory stores about 40,000 micro-operations. As one example, multiple critical functionality or security issues that are to be fixed in the field via microcode patching (e.g., by patching to different micro-operations, which may be referred to as patch micro-code) may include providing a plurality (e.g., of a size greater than the patch memory) of micro-operations, and a fixed storage size (e.g., about 512 micro-operations) of patch memory 406 may result in the inability to patch such critical issues.

Certain embodiments herein improve the functioning of system 400 by extending microcode patching through on-die and off-die (e.g., secure) memory (e.g., storage elements). Certain embodiments herein provide additional storage resources in cache 408 for storing numerous (e.g., a thousand or thousands) of additional micro-operations. Cache 408 may include a copy of the micro-operations (e.g., patches) for patch memory 406, e.g., to restore the content of volatile patch memory 406 that is lost when the power is lowered from it and the cache 408 is non-volatile or does not have its power lowered to a level that causes a loss of content. Certain embodiments herein include storage of extended patch content 412 (e.g., patch micro-operations). In one embodiment, microcode sequencer 402 executes code that causes a copy of data from cache 408 to patch memory 406. However, as real-world resources may be limited in a system 400, such that the solution is not merely to allocate new storage that is used only for storing extended patch content, certain embodiments herein utilize (e.g., scavenge) section(s) of memory that have other uses as well. In one embodiment, the storage used for extended patch content (e.g., micro-operations) is not user accessible, e.g., for security purposes.

Certain embodiments herein leverage on-die secure storage in cache (e.g., in C6 SRAM) for extended patch content (e.g., micro-operations). A first mode of extended patching (e.g., a "ghost" patch embodiment) uses a section of cache (e.g., in C6 SRAM) that is not used in runtime, idle time, and/or off time for a core. A second mode of extended patching (e.g., a "super-ghost" patch embodiment) uses a section of cache (e.g., in C6 SRAM) that is not used in runtime for a core (e.g., storage that is used to store context information from the core when the core is transitioned to a power state that shuts off voltage to the core) (e.g., thread 0, thread 1, to thread N in C6 SRAM) and may also be stored (e.g., encrypted with integrity) in external storage (e.g., DRAM) (e.g., system memory 108 in Figure 1). The micro-operations of the extended patch content may be called ghost micro-operations as they are not located in the patch memory (e.g., MS-RAM) but in cache (e.g., C6 SRAM) or in system memory (e.g., DRAM). A third mode of extended patching (e.g., an "uber-ghost" patch embodiment) allows for the dynamic selection (e.g., via a control register) of a proper subset of enhanced patch components of the first mode or the second mode of extended patching, e.g., depending on the platform configuration and/or workload requirements. In certain embodiments, the third mode of extended patching allows a user to dynamically select specific pieces of performance-sensitive functionality at runtime from a unified, extended microcode patch with first mode or second mode components depending on the platform configuration and/or workload requirements.

Certain embodiments of microcode patching are extended by storing a (e.g., small) microcode routine (e.g., code including a set of micro-operations, which may be referred to as enhanced patch code) in patch memory that, when executed, causes one or more of the patch micro-operations of the extended patch content to be stored (e.g., copied) from the extended patch storage (e.g., C6 power state storage section of cache) into the patch memory, for example, for use by a micro-code sequencer to translate (e.g., decode) a patched instruction. Note that enhanced patch code may refer to the micro-operations that cause the extending of storage, but extended patch storage may refer to storage for the micro-operations that are used as the patch itself for an instruction (e.g., that change the functionality of the instruction).

In one embodiment, the microcode routine (e.g., code including a set of micro-operations, which may be referred to as enhanced patch code) may be any combination of: called from different patch points, gets exclusive access to execution resources so only one (e.g., central-processing unit (CPU) or logical core) thread is executing, loads (e.g., copies without destroying) a (e.g., given) number of micro-operations per instruction from the extended patch storage into the patch memory, executes those micro-operations for the instruction, restores any micro-operations (that were overwritten by the load) from the copy of the previous patch memory data (e.g., patch content 410 in Figure 4) (e.g., where they were stored at microcode patch load time), releases exclusive access, and returns after the patch point that called the microcode routine (e.g., ghost, super-ghost, or uber-ghost patch routine). In one embodiment of the third mode of patching (e.g., an "uber-ghost" patch embodiment), a microcode sequencer performs dynamic reconfiguration of runtime patch memory (e.g., MS-RAM) to include performance-sensitive micro-operation sections grouped per function (e.g., per macro-instruction) that the platform owner can select via a software interface (e.g., a control register) from a microcode patch function menu of multiple functions selectable but that cannot all fit in the runtime patch memory (e.g. there may be two performance-sensitive functions included in the microcode patch as components 1 and 2 but either 1 or 2, not both, can fit in the runtime patch memory).

In certain embodiments, microcode patching is extended (e.g., to allow storage of numerous micro-operations that can be used to address critical functionality and security bugs or drive innovative capabilities post product launch) by leveraging (i) completely unused sections of a cache (e.g., the C6 power state section of the cache) (e.g., in a "ghost" patch embodiment) and/or (ii) unused at runtime sections of a cache (e.g., the C6 power state section of the cache) and system memory (e.g., DRAM back-up of C6 SRAM) (e.g., in a "super-ghost" patch embodiment).

In certain embodiments, the patch swapping may have a performance penalty due to single thread execution for the copying of the extended patch content from cache (e.g., C6 SRAM) into the patch memory (e.g., MS-RAM) and then copying of the runtime patch content (e.g., patch content 410 from Fig. 4) from cache (e.g., C6 SRAM) into the patch memory (e.g., MS-RAM), but there are a plurality of functional and security fixes that are not latency sensitive or that are infrequently invoked (e.g., filtering of processor accesses to devices, such as the platform controller hub (PCH), that may take thousands of core cycles to complete) that can fully benefit from extended patch capability.

Certain processor cores (e.g., for client use or for server use) may employ on-die storage (e.g., a section of cache that is used to store context information for a power state change) that is used to store thread, core, and/or non-core circuitry state (e.g., context information) for various environments (e.g., a runtime or other copy of the microcode patch of patch memory, thread state for (e.g., TC6/TC7) low power states, core state for (e.g., CC6/CC7) low power states, virtual machine caching structure (VMCS) state, graphics state storage (e.g., for a graphics thread (GT)), a section that is used when not in runtime, but is not used during runtime, storage of coherency information for a transition of a cache coherency circuit (e.g., cache box (CBo)) (e.g., low power package states), thread state when entering system management mode (SMM), etc.).

For example, a processor core for server use may include an unused section of the cache (e.g., C6 SRAM) called the address hole with storage behind it and/or other unused sections of the cache (e.g., C6 SRAM) (e.g. graphics state storage when the server does not perform graphics processing), and these unused sections of the cache (e.g., C6 SRAM) can be used to store additional microcode patch micro-operations contents (e.g., in a "ghost" patch embodiment). In one embodiment, the extended patch content are micro-operations used to patch an instruction, and the extended patch content is part of the microcode patch binary image that is encrypted and signed by a manufacturer, and at patch load time after the successful authentication of the patch, it is written into an unused section of the cache (e.g., C6 SRAM). In certain embodiments, the extended patch content (e.g., also) includes a list of micro patch-match registers (e.g., that when a bit(s) is set) causes an intercept (e.g., interrupt) of processor execution and calls for execution of enhanced patch code (e.g., "ghost" patch routine) from any flow that is desired to use the extended patching (e.g., "ghost" patch) functionality. In one embodiment, a micro-patch match register includes a bit or bits (e.g., . In one embodiment, a microcode patch loader code, that when executed, causes a copy of the patch memory (e.g., the runtime section of the microcode patch that includes micro-operations and micro patch-match registers) to be saved in a section of the cache (e.g., C6 SRAM), for example, with the extended patch content saved in a different section. In certain embodiments, the enhanced patch code (e.g., the "ghost" patch routine part of the runtime MS-RAM) gets exclusive access so that only one thread is executing (e.g., in a core), then copies a requested section of the extended patch content (e.g., patch micro-operation(s)) from the corresponding location in the cache (e.g., C6 SRAM) into the patch memory (e.g., MS-RAM). In one embodiment, the core will execute the patch micro-operation(s) from patch memory (e.g., MS-RAM) (e.g., patch memory 206 in Figure 2, patch memory 306 in Figure 4, or patch memory 406 in Figure 4) and at the end will copy back into the (e.g., runtime) patch memory (e.g., MS-RAM) the "original" micro-operations from the copy of the patch memory (e.g., the runtime section of the microcode patch that includes micro-operations and micro patch-match registers) stored in another section of the cache (e.g., C6 SRAM) (e.g., from patch content 410 in Figure 4), and may then release exclusive access and return to the interrupted flow.

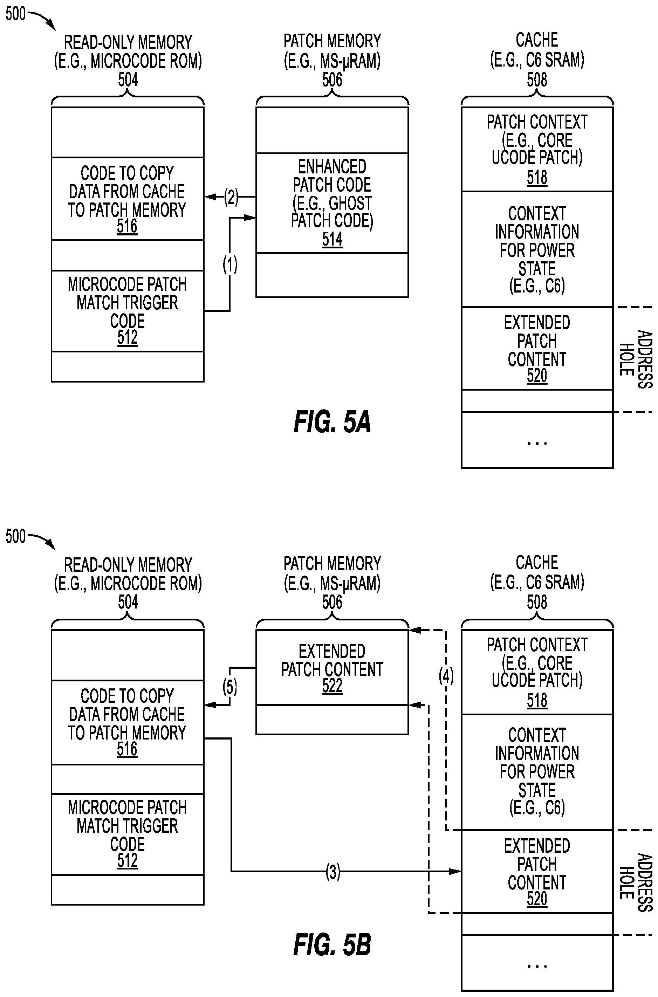

In certain embodiments, a microcode update populates both the patch memory (e.g., MS-RAM 206 in Figure 2) and match register(s) (e.g., micro patch-match register(s) 224 in Figure 2) that act as breakpoints within the read-only memory (e.g., MS-ROM 204 in Figure 2), to allow jumping to the updated micro-operation(s) in the patch memory (e.g., MS-RAM 206 in Figure 2). In one embodiment, a match operation is performed for each micro-operation (that is requested to be executed) against the micro-operations identified by the match register(s) as including a patch (for example, by comparing a micro-operation pointer (e.g., microcode instruction pointer (UIP)) to all of a plurality of pointers stored in match registers for patched micro-operations) and with any match resulting in a jump (e.g., of execution) to the corresponding destination micro-operation address in the patch memory. In one embodiment, a match then triggers execution of code (e.g., microcode patch match trigger code 512 in Figures 5A-5C). In one embodiment, a match register includes a microcode match address (for example, a micro-operation address of the read only-memory, e.g., an address for a particular micro-operation in the MS-ROM 204 in Figure 2) and a microcode destination address of the patch memory (e.g., address for a patched micro-operation(s) in the MS-RAM 206 in Figure 2).

In certain embodiments, the subset of (e.g., less than all of) the extended patch content (e.g., micro-operation(s)) copied from the extended patch storage section of the cache (e.g., C6 SRAM) into patch memory (e.g., MS-RAM) depends on the function calling the enhanced patch code. In one embodiment, execution of the enhanced patch code causes loading (e.g., copying) of only a subset of less than all of the extended patch content (e.g., micro-operation(s)) for performance reasons.

For example, a processor core for client use may not have enough unused space in the section of the cache (e.g., C6 SRAM), and utilize one of the other patch extension modes discussed herein (e.g., the second or third mode). For example, a processor core for server use may need more microcode patch storage space than what is available in previously unused sections of the cache (e.g., C6 SRAM). In one embodiment, a second mode of patching micro-operations uses existing sections of the cache (e.g., C6 SRAM) that are used when the core/thread is in a low power state but are not used at runtime (e.g., where a thread/core cannot be simultaneously in both an active and a sleep state, such as TC6 or TC7 or CC6 or CC7). In one embodiment when the second mode is enabled, the hardware initialization manager (e.g., BIOS) or software (e.g., OS or virtual machine monitor (VMM)) allocates a reserved area in the system memory (e.g., main memory) (e.g., DRAM) via a control register (e.g., model specific register (MSR) interface).

In one embodiment when the second mode is enabled, at the patch load time, if the reserved area was allocated prior to the microcode patch load trigger operation, the load time microcode patch section will store the extended patch content (e.g., micro-operations) in the corresponding thread's context information storage section (e.g., for TC6/TC7 low power states) of the cache (e.g., C6 section of SRAM) and will also store it encrypted with integrity protection in the reserved area in the system memory. In certain embodiments, low power state exit code (e.g., restoration code) (e.g., implementing the TC6/TC7 exit restoration) causes the loading (e.g., copying) of the encrypted version of the extended patch content from the system memory, decrypting it, and storing (e.g., if authenticated) of the decrypted extended patch content back into the context information storage section (e.g., for TC6/TC7 low power states) of the cache (e.g., C6 SRAM). In one embodiment, the low power state exit code is stored in a (e.g., different) section of the cache (e.g., C6 SRAM), for example, that is previously unused in the cache. In one embodiment, the encryption is performed with an (e.g., 128-bit) encryption algorithm (e.g., of the Advanced Encryption Standard (AES)) key generated by an on-die digital random number generator (DRNG), the initialization vector (IV) is a same number of bits (e.g., 128-bit) value generated by the on-die digital random number generator (DRNG), the computed key schedule and IV are stored in (e.g., fast scratchpad) registers located in the core, and the integrity is computed based on the (e.g., AES-Galois/Counter Mode (AES-GCM)) encryption algorithm. In one embodiment, a thread will enter unbreakable shutdown in case the microcode patch integrity check failed.

In certain embodiments, at runtime, a second mode of extended patching (e.g., a "super-ghost" patch embodiment) functions the same as a first mode of extended patching (e.g., a "ghost" patch embodiment) except the extended patch content is being copied from a same location that is also used to store a thread's or core's context information when the thread or core, respectively, is not in runtime, for example, instead of copying the extended patch content from a previously unused (e.g., it was a "hole" that was not set aside for any use) section.

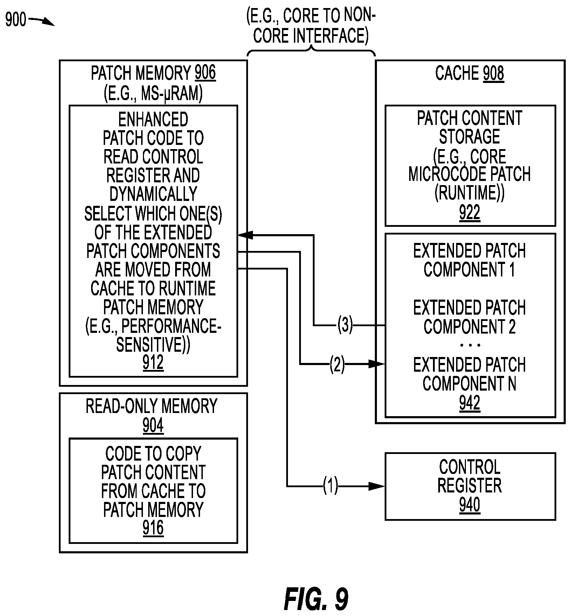

In certain embodiments, a third mode of extended patching (e.g., an "uber-ghost" patch embodiment) allows for dynamic reconfiguration of runtime patch memory (e.g., MS-RAM) for performance-sensitive pieces of functionality (e.g., to select a proper subset of the components shown in Figure 9. In one embodiment, a user (e.g., platform owner or administrator) selects which extended patching functionality (e.g., component(s)) is active at runtime based on a control register (e.g., MSR). In certain embodiments, a third mode of extended patching (e.g., an "uber-ghost" patch embodiment) includes a plurality of components that are part of a microcode patch, for example, and are defined as first mode or second mode patch components. In one embodiment, all of the plurality of components of the extended patch content will not fit in the runtime patch memory (e.g., MS-RAM). For example, there may be two components as part of a given microcode patch but only one of them will fit in patch memory (e.g., MS-RAM). In one embodiment, the control register (e.g., MSR) allows the selection of either component, and causes the microcode (e.g., micro-operations) for that component to be copied from the section of the cache (e.g., C6 section of SRAM) into the patch memory (e.g., MS-RAM).

Figures 5A-9 each illustrate various storage locations for code and extended patch content. It should be understood that each read-only memory in Figures 5A-9 may be any read-only memory, e.g., read-only memory 204 in Figure 2, read-only memory 304 in Figure 3, or read-only memory 404 in Figure 4. It should be understood that each patch memory in Figures 5A-9 may be any patch memory, e.g., patch memory 206 in Figure 2, patch memory 306 in Figure 4, or patch memory 406 in Figure 4. It should be understood that each system memory in Figures 5A-9 may be any system memory, e.g., system memory 108 in Figure 1. It should be understood that all storage (e.g., memory) may be non-transitory.

In certain embodiments, a read-only memory is loaded with its (e.g., as depicted in the Figures) data at manufacture time. In certain embodiments, the patch memory and/or cache are loaded with its data (e.g., as depicted in the Figures) or firmware is updated to cause a load of that data by a microcode patch binary image sent by the manufacturer.

Figures 5A-5C illustrate extended patching in a system 500 including a read-only memory 504, a patch memory 506, and a cache 508 according to embodiments of the disclosure. In Figure 5A, read-only memory 504 includes microcode patch-match trigger code 512 and code 516 to copy data from cache 508 to patch memory 506. In certain embodiments, an instruction is received (e.g., by a microcode sequencer) for decoding, and it is determined (e.g., by the comparing the address, pointer, or opcode of that instruction to a list of addresses, pointers, or opcodes for patched instructions) that the instruction is one that is to-be-patched (e.g., using additional and/or different micro-operations than those stored in read-only memory 504). In certain embodiments, receipt of an instruction (e.g., for decoding) causes a comparison (e.g., by a microcode sequencer) of that instruction (e.g., one or more micro-operations for that instruction) to a list of patched instructions (e.g., patched micro-operations). In one embodiment, when a match is determined (e.g., for an enhanced patch), the microcode patch-match trigger code 512 then triggers the execution of the enhanced patch code 514 (e.g., "ghost" patch code) stored in patch memory 506. In certain embodiments, the execution of the enhanced patch code 514 (e.g., "ghost" patch code) stored in patch memory 506 causes execution of code 516 to copy (e.g., all or a proper subset of) extended patch content 520 (e.g., micro-operations) from the cache 508 to patch memory 506, e.g., and the over-writing of micro-operations that were already stored in the patch memory 506.

In Figure 5B, the copy 522 of the extended patch content 520 has been saved in patch memory 506. In one embodiment, the copy 522 overwrites the enhanced patch code 514. In another embodiment, the copy 522 does not overwrite the enhanced patch code 514. Optionally, the completion of saving the copy 522 of the extended patch content in patch memory 506 is indicated to the code 516, e.g., as that code is to cause execution of the copy 522 of the extended patch content from patch memory 506.

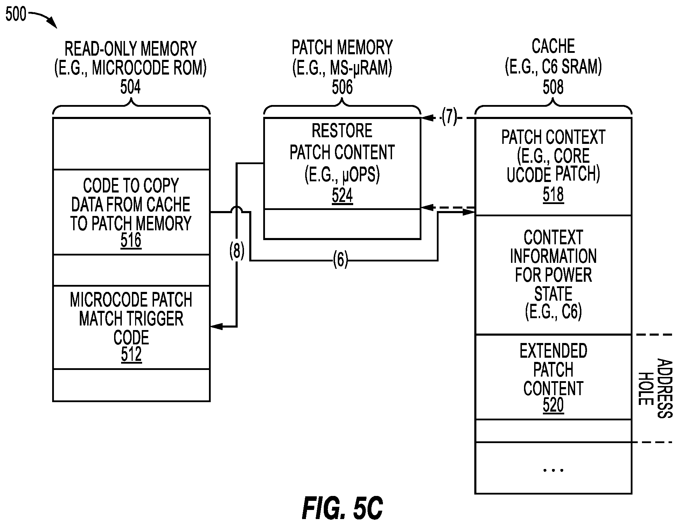

In Figure 5C, the execution of the copy 522 of the extended patch content from patch memory 506 is complete, so the code 516 is then to cause a load (e.g., restoration) of the (e.g., all or only the overwritten) data in the patch memory 506 from the copy 518 of the overwritten data (e.g., the patch content, but not the extended patch content) to restore the patch content 524. In one embodiment, after patch content 524 is stored (e.g., restored) into patch memory 506, an indication of that is sent to the microcode patch-match trigger code 512, for example, which then allows the microcode sequencer to move onto decoding the next instruction (e.g., and/or removes the core from being in single thread mode).

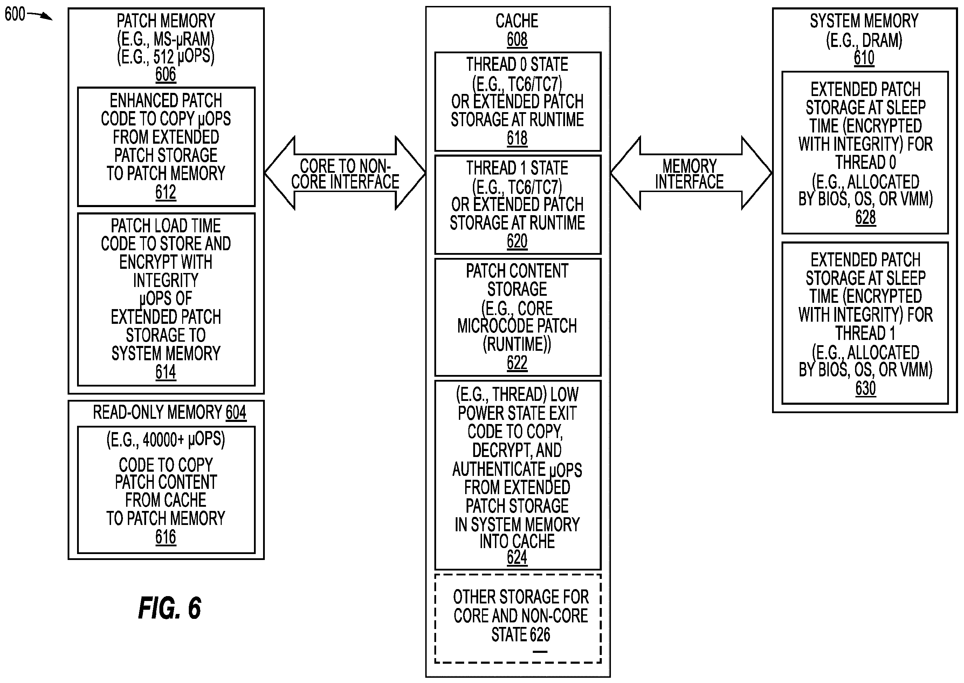

Figure 6 illustrates extended patching in a system 600 including a read-only memory 604, a patch memory 606, a cache 608, and a system memory 610 according to embodiments of the disclosure. Although Figure 6 illustrates storage and code for multiple patching modes (e.g., first, second, and third modes), it should be understood that any one or more of these components may be used, e.g., for a core operating in a single patching mode.

In Figure 6, patch memory 606 includes enhanced patch code 612, that when executed, causes data (e.g., micro-operation or micro-operations) to be copied from extended patch storage (e.g., 618, 620 in cache 608) to patch memory 606. Enhanced patch code 612 may include microcode patch-match trigger code. In certain embodiments, an instruction is received (e.g., by a microcode sequencer) for decoding, and it is determined (e.g., by the comparing the opcode of that instruction to a list of opcodes for patched instructions) that the instruction is one that is to-be-patched (e.g., using additional and/or different micro-operations than those stored in read-only memory 604). In certain embodiments, receipt of an instruction for decoding causes execution of enhanced patch code 612, which compares that instruction, e.g., its opcode, to a list of opcodes for patched instruction(s). In one embodiment, when a match is determined, the enhanced patch code 612 then causes a load of (e.g., all or a proper subset of) extended patch content (e.g., 618 or 620) (e.g., micro-operations) from the cache 608 to patch memory 606, e.g., and the over-writing of micro-operations that were already stored in the patch memory 606.

Patch memory 606 (or read-only memory 604) may include patch load time code 614, that when executed, causes a store (e.g., and encrypt with integrity) of the extended patch code (e.g., micro-operations) into system memory 610. Read-only memory 604 (or patch memory 606) may include code 616, that when executed, causes a load of the patch content from patch content storage 622 of cache 608 (e.g., C6 section of cache) into patch memory 606. In one embodiment, a reset of a processor (e.g., core) causes execution of code 616.

Depicted cache 608 includes two sections 618 and 620 (although a single or any plurality may be used) that are reserved (e.g., takes the highest priority) for context information (e.g., thread state) for a respective thread (T0 and T1) that is to be turned off (e.g., power shut off to the core or execution resources for that thread). In one embodiment, a thread state includes the content of register(s), cache(s), and/or other data in execution resources at the time of stoppage. In certain embodiments, one or more of sections 618 and 620 are used (e.g., when a respective thread is running, and thus is not storing its state yet) as extended patch storage for microcode patching. Depicted system memory 610 (e.g., in a second mode of microcode patching) includes a partition 628 allocated to store (e.g., encrypted) a copy of the extended patch content (e.g., micro-operations) that is stored (e.g., in runtime) in thread 0's reserved section 618 of cache 608, for example, so that when reserved section 618 is used to store the thread 0 state, when that thread state is restored into the thread's execution resources, the copy of the extended patch content is loaded (e.g., copied) from partition 628 of system memory 610 into thread 0's now unused, yet reserved, section 618 of cache 608. Depicted system memory 610 (e.g., in a second mode of microcode patching) includes a partition 630 allocated to store (e.g., encrypted) a copy of the extended patch content (e.g., micro-operations) that is stored (e.g., in runtime) in thread 1's reserved section 620 of cache 608, for example, so that when reserved section 620 is used to store the thread 1 state, when that thread state is restored into the thread's execution resources, the copy of the extended patch content is loaded (e.g., copied) from partition 630 of system memory 610 into thread 1's now unused, yet reserved, section 620 of cache 608.

Cache 608 may include a copy of the (non-extended) patch content stored in patch content storage 622, e.g., a copy of the patch memory 606 before it is overwritten with extended patch content (e.g., micro-operations).

Cache 608 may include lower power state exit code 624 (e.g., core or thread context information restore code) that, when executed, copies (e.g., and decrypts and authenticates) extended patch content from (e.g., partition 628 and/or partition 630 of) system memory 610 into (e.g., section 618 and/or section 620 of) cache 608. Cache 608 may include other storage for non-core circuitry state or core state 626, e.g., that is not utilized during extended microcode patching.

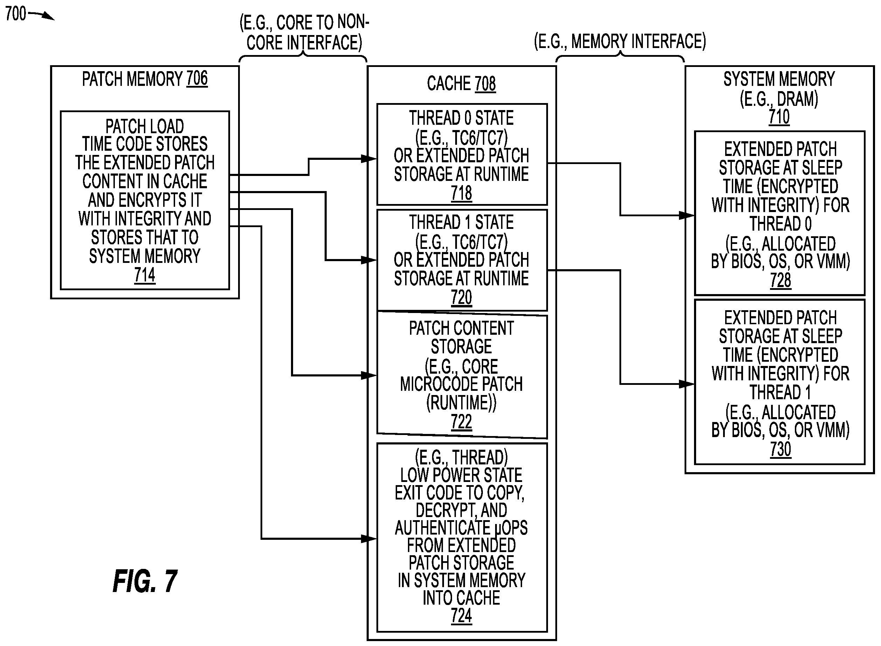

Figure 7 illustrates extended patching in a system 700 including a patch memory 706, a cache 708, and a system memory 710 according to embodiments of the disclosure. In one embodiment, system 700 implements a second mode of extended patching (e.g., a "super-ghost" patch embodiment).

In Figure 7, patch memory 706 may include patch load time code 714, that when executed, causes a store of the extended patch code (e.g., micro-operations) into cache 708 (e.g., into the C6 context information storage section (e.g., block) of the cache) and a store (e.g., and encrypts with integrity) of the extended patch code into system memory 710. Depicted cache 708 includes two sections 718 and 720 (although a single or any plurality may be used) that are reserved (e.g., takes the highest priority) for context information (e.g., thread state) for a respective thread (T0 and T1) that is to be turned off (e.g., power shut off to the core or execution resources for that thread). In one embodiment, a thread state includes the content of register(s), cache(s), and/or other data in execution resources at the time of stoppage. In certain embodiments, one or more of sections 718 and 720 are used (e.g., when a respective thread is running, and thus is not storing its state yet) as extended patch storage for microcode patching. Depicted system memory 710 (e.g., in a second mode of microcode patching) includes a partition 728 allocated to store (e.g., encrypted) a copy of the extended patch content (e.g., micro-operations) that is stored (e.g., in runtime) in thread 0's reserved section 718 of cache 708, for example, so that when reserved section 718 is used to store the thread 0 state, when that thread state is restored into the thread's execution resources, the copy of the extended patch content is loaded (e.g., copied) from partition 728 of system memory 710 into thread 0's now unused, yet reserved, section 718 of cache 708. Depicted system memory 710 (e.g., in a second mode of microcode patching) includes a partition 730 allocated to store (e.g., encrypted) a copy of the extended patch content (e.g., micro-operations) that is stored (e.g., in runtime) in thread 1's reserved section 720 of cache 708, for example, so that when reserved section 720 is used to store the thread 1 state, when that thread state is restored into the thread's execution resources, the copy of the extended patch content is loaded (e.g., copied) from partition 730 of system memory 710 into thread 1's now unused, yet reserved, section 720 of cache 708.

Cache 708 may include a copy 722 of the (non-extended) patch content, e.g., a copy of the patch memory 706 before it is overwritten with extended patch content (e.g., micro-operations).

Cache 708 may include low (e.g., lower) power state exit code 724 (e.g., core or thread context information restore code) that, when executed, copies (e.g., and decrypts and authenticates) extended patch content from (e.g., partition 728 and/or partition 730 of) system memory 710 into (e.g., section 718 and/or section 720 of) cache 708.

In certain embodiments, at microcode patch load time (e.g., triggered by executing a write to control register instruction to set a bit or bits of a control register), patch load time code 714 (e.g., microcode patch loader) (e.g., after authenticating the new microcode patch specified by software) executes to cause a store of the extended patch content (e.g., micro-operations) in the corresponding thread's context information storage section (e.g., 718 or 720 for TC6/TC7 low power states) of the cache (e.g., C6 section of SRAM) and will also store it encrypted with integrity protection in the reserved area in the system memory 710. In certain embodiments, low power state exit code 724 (e.g., restoration code) (e.g., implementing the TC6/TC7 exit restoration) causes the loading (e.g., copying) of the encrypted version of the extended patch content from the system memory 710, decrypting it, and storing (e.g., if authenticated) of the decrypted extended patch content back into the context information storage section (e.g., 718 or 720 for TC6/TC7 low power states) of the cache 708 (e.g., C6 SRAM).

In one embodiment, execution of the patch load time code 714 causes a store of one or more (e.g., any combination) of the items depicted in cache 708 and/or system memory 710 in Figure 7.

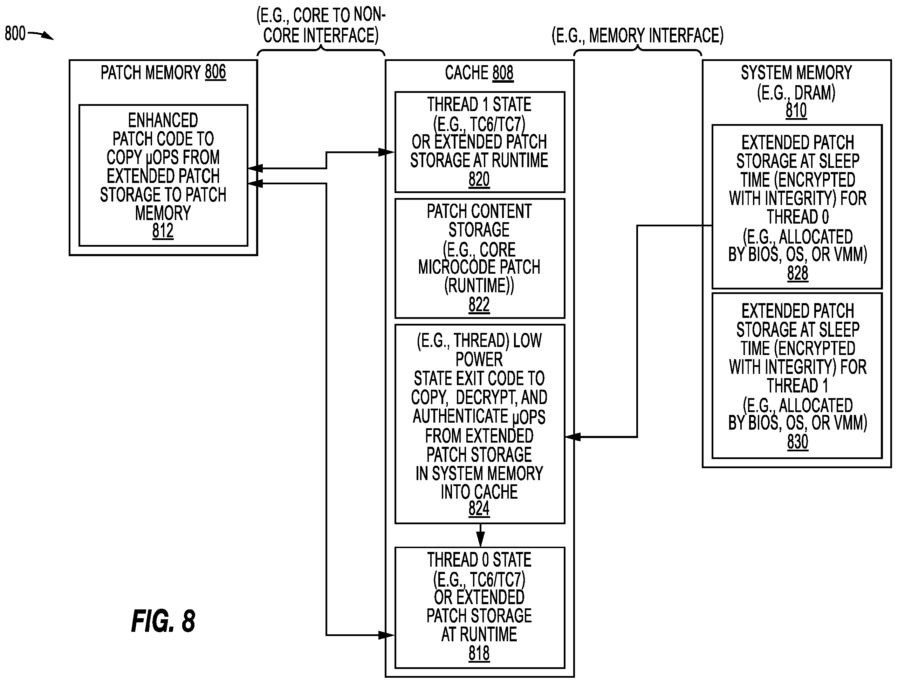

**Figure 8** illustrates extended patching in a system 800 including a patch memory 806, a cache 808, and a system memory 810 according to embodiments of the disclosure. In one embodiment, system 800 implements a second mode of extended patching (e.g., a "super-ghost" patch embodiment).

In **Figure 8****,** patch memory 806 includes enhanced patch code 812, that when executed, causes data (e.g., micro-operation or micro-operations) to be copied from extended patch storage (e.g., 818, 820 in cache 808) to patch memory 806. Enhanced patch code 812 may include microcode patch-match trigger code. In certain embodiments, an instruction is received (e.g., by a microcode sequencer) for decoding, and it is determined (e.g., by the comparing the opcode of that instruction to a list of opcodes for patched instructions) that the instruction is one that is to-be-patched (e.g., using additional and/or different micro-operations than those stored in read-only memory). In certain embodiments, receipt of an instruction for decoding causes execution of enhanced patch code 812, which compares that instruction, e.g., its opcode, to a list of opcodes for patched instruction(s). Note the discussion of opcode fields below. In one embodiment, when a match is determined, the enhanced patch code 812 then causes a load of (e.g., all or a proper subset of) extended patch content (e.g., from 818 or 820) (e.g., micro-operations) from the cache 808 to patch memory 806, e.g., and the over-writing of micro-operations that were already stored in the patch memory 806.

Patch memory 806 (or read-only memory) may include patch load time code, that when executed, causes a store (e.g., and encrypt with integrity) of the extended patch code (e.g., micro-operations) into system memory 810.

Depicted cache 808 includes two sections 818 and 820 (although a single or any plurality may be used) that are reserved (e.g., takes the highest priority) for context information (e.g., thread state) for a respective thread (T0 and T1) that is to be turned off (e.g., power shut off to the core or execution resources for that thread). In one embodiment, a thread state includes the content of register(s), cache(s), and/or other data in execution resources at the time of stoppage. In certain embodiments, one or more of sections 818 and 820 are used (e.g., when a respective thread is running, and thus is not storing its state yet) as extended patch storage for microcode patching. Depicted system memory 810 (e.g., in a second mode of microcode patching) includes a partition 828 allocated to store (e.g., encrypted) a copy of the extended patch content (e.g., micro-operations) that is stored (e.g., in runtime) in thread 0's reserved section 818 of cache 808, for example, so that when reserved section 818 is used to store the thread 0 state, when that thread state is restored into the thread's execution resources, the copy of the extended patch content is loaded (e.g., copied) from partition 828 of system memory 810 into thread 0's now unused, yet reserved, section 818 of cache 808. Depicted system memory 810 (e.g., in a second mode of microcode patching) includes a partition 830 allocated to store (e.g., encrypted) a copy of the extended patch content (e.g., micro-operations) that is stored (e.g., in runtime) in thread 1's reserved section 820 of cache 808, for example, so that when reserved section 820 is used to store the thread 1 state, when that thread state is restored into the thread's execution resources, the copy of the extended patch content is loaded (e.g., copied) from partition 830 of system memory 810 into thread 1's now unused, yet reserved, section 820 of cache 808.

Cache 808 may include a copy 822 of the (non-extended) patch content, e.g., a copy of the patch memory 806 before it is overwritten with extended patch content (e.g., micro-operations). Cache 808 may include lower power state exit code 824 (e.g., core or thread context information restore code) that, when executed, copies (e.g., and decrypts and authenticates) extended patch content from (e.g., partition 828 and/or partition 830 of) system memory 810 into (e.g., section 818 and/or section 820 of) cache 808.

In one embodiment, execution of the extended patch code 812 causes a store and/or load of one or more (e.g., any combination) of the items depicted in cache 808 and/or system memory 810 in Figure 8.

In one embodiment, exiting a power state (e.g., the TC6 low power state or TC7 low power state) that caused the store of core and/or thread context information into storage section 818 or 820, causes execution of lower power state exit code 824 (e.g., core or thread context information restore code) that copies (e.g., and decrypts and authenticate/integrity check it) extended patch content from (e.g., partition 828 and/or partition 830 of) system memory 810 into (e.g., section 818 and/or section 820 of) cache 808.

**Figure 9** illustrates extended patching in a system including a control register 940, a read-only memory 904, a patch memory 906, and a cache 908 according to embodiments of the disclosure. In one embodiment, system 900 implements a third mode of extended patching (e.g., an "uber-ghost" patch embodiment).

In Figure 9, patch memory 906 includes enhanced patch code 912, that when executed, reads a value stored in control register 940 and, based on that value, selects one or more (e.g., any combination of) extended patch components 1-N (where N is any integer), and causes the components (e.g., micro-operation or micro-operations) to be copied from extended patch storage 942 to patch memory 906.

In one embodiment, the component(s) of the enhanced patch code 912 that are loaded from extended patch component storage 942 of the cache 908 remain stored in patch memory 906, e.g., and the over-writing of micro-operations that were already stored in the patch memory 906. In one embodiment, the extended patch content remains stored in the patch memory until the core is reset or the workload changes (e.g., a change from a first virtual machine to a second virtual machine).

Cache 908 may include a copy of the (non-extended) patch content stored in patch content storage 922, e.g., a copy of the patch memory 906 before it is overwritten with extended patch content component(s) (e.g., micro-operations). In one embodiment, a user (e.g., platform owner or administrator) selects which extended patching functionality (e.g., which of component or components 1-N) is active at runtime based on control register 940. In certain embodiments, a third mode of extended patching (e.g., an "uber-ghost" patch embodiment) includes a plurality of components 1-N that are part of a microcode patch, for example, and are also defined under a first mode or second mode of patching. In one embodiment, all of the plurality of components of the extended patch components will not fit in the runtime patch memory 906 (e.g., MS-RAM). For example, there may be N number of components as part of a given microcode patch but only a proper subset (e.g., less than N) will fit in patch memory 906 (e.g., MS-RAM). In certain embodiments, the control register 940 allows the selection (e.g., by software) of any component(s), and causes the microcode (e.g., micro-operations) for that component to be copied from the extended patch storage section 942 of the cache (e.g., C6 section of SRAM) and then reside in the patch memory 906 (e.g., MS-RAM).

Read-only memory 904 (or patch memory 906) may include code 916, that when executed, causes a load of the patch content from patch content storage 922 of cache 908 (e.g., C6 section of cache) into patch memory 906. In one embodiment, a reset of a processor (e.g., core) causes execution of code 916.

In certain embodiments herein, a patch memory does not have storage space for an entire set of micro-operations, so a microcode sequencer may iteratively (e.g., serially) swap portions of less than all of the entire set from the cache (e.g., C6 section of SRAM) into the patch memory (e.g., MS-RAM) until the instruction that caused the extended patching to be used has executed the entire set of micro-operations. In one embodiment, the latency for a core to non-core operation is lower (e.g., about 40 cycles of the core clock) than the latency for a core to system memory operation (e.g., about 300 cycles of the core clock).

In certain embodiments, only microcode (e.g., and not user supplied instructions) can access a certain section (e.g., the C6 section) of cache. In one embodiment, the hardware initialization manager (e.g., executing BIOS or UEFI firmware) causes one or more of the code discussed herein to be loaded into storage, e.g., into a certain section (e.g., the C6 section) of cache.

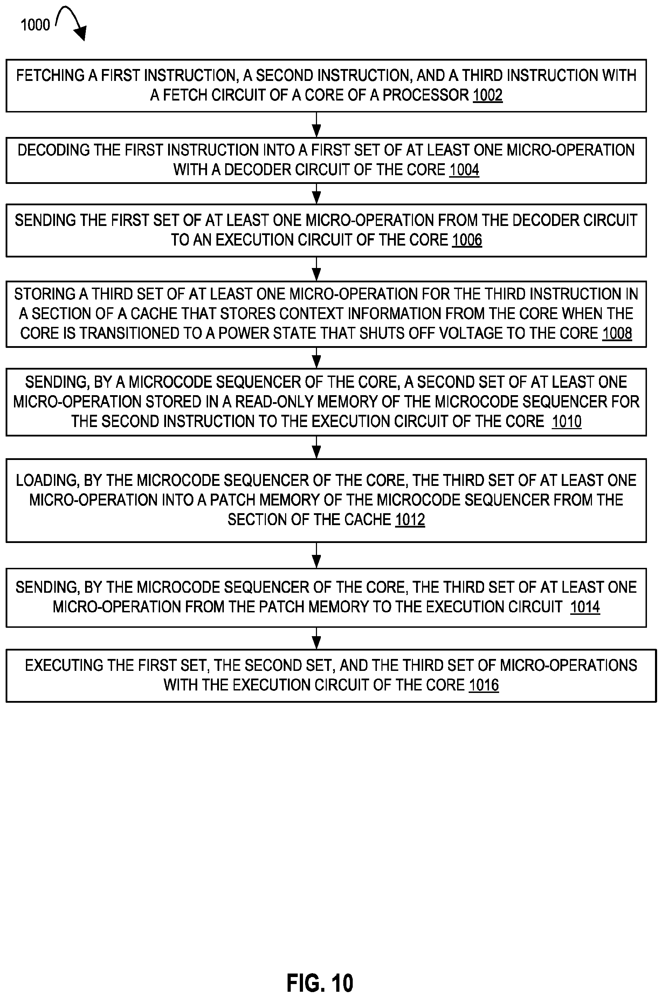

In certain embodiments, a microcode sequencer (e.g., microcode sequencer circuit) includes the code discussed herein, for example, the microcode sequencer causes the code that performs the extending patching to be executed, e.g., on receipt by the microcode sequencer of an instruction that is to be decoded. A microcode sequencer may utilize any of the methods or flow discussed herein, e.g., any of the flows discussed in Figures 10-12.

**Figure 10** illustrates a flow diagram 1000 for extended patching according to embodiments of the disclosure. Depicted flow 1000 includes fetching a first instruction, a second instruction, and a third instruction with a fetch circuit of a core of a processor 1002; decoding the first instruction into a first set of at least one micro-operation with a decoder circuit of the core 1004; sending the first set of at least one micro-operation from the decoder circuit to an execution circuit of the core 1006; storing a third set of at least one micro-operation for the third instruction in a section of a cache that stores context information from the core when the core is transitioned to a power state that shuts off voltage to the core 1008; sending, by a microcode sequencer of the core, a second set of at least one micro-operation stored in a read-only memory of the microcode sequencer for the second instruction to the execution circuit of the core 1010; loading, by the microcode sequencer of the core, the third set of at least one micro-operation into a patch memory of the microcode sequencer from the section of the cache 1012; sending, by the microcode sequencer of the core, the third set of at least one micro-operation from the patch memory to the execution circuit 1014; and executing the first set, the second set, and the third set of micro-operations with the execution circuit of the core 1016.

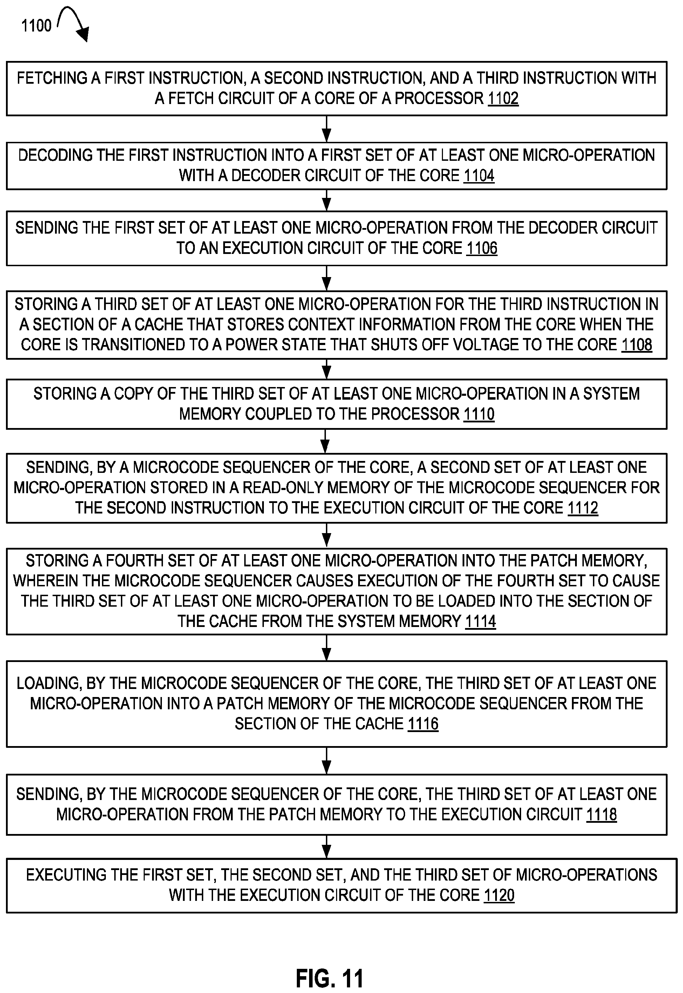

**Figure 11** illustrates a flow diagram 1100 for extended patching according to embodiments of the disclosure. Depicted flow 1100 includes fetching a first instruction, a second instruction, and a third instruction with a fetch circuit of a core of a processor 1102; decoding the first instruction into a first set of at least one micro-operation with a decoder circuit of the core 1104; sending the first set of at least one micro-operation from the decoder circuit to an execution circuit of the core 1106; storing a third set of at least one micro-operation for the third instruction in a section of a cache that stores context information from the core when the core is transitioned to a power state that shuts off voltage to the core 1108; storing a copy of the third set of at least one micro-operation in a system memory coupled to the processor 1110; sending, by a microcode sequencer of the core, a second set of at least one micro-operation stored in a read-only memory of the microcode sequencer for the second instruction to the execution circuit of the core 1112; storing a fourth set of at least one micro-operation into the patch memory, wherein the microcode sequencer causes execution of the fourth set to cause the third set of at least one micro-operation to be loaded into the section of the cache from the system memory 1114; loading, by the microcode sequencer of the core, the third set of at least one micro-operation into a patch memory of the microcode sequencer from the section of the cache 1116; sending, by the microcode sequencer of the core, the third set of at least one micro-operation from the patch memory to the execution circuit 1118; and executing the first set, the second set, and the third set of micro-operations with the execution circuit of the core 1120.

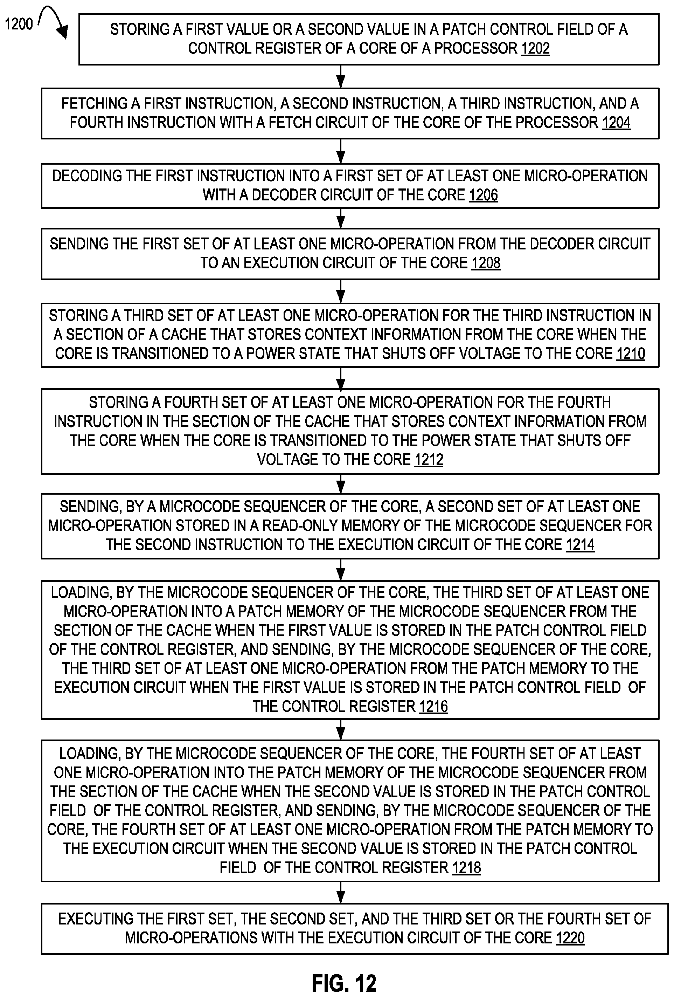

**Figure 12** illustrates a flow diagram 1200 for extended patching according to embodiments of the disclosure. Depicted flow 1200 includes storing a first value or a second value in a patch control field of a control register of a core of a processor 1202; fetching a first instruction, a second instruction, a third instruction, and a fourth instruction with a fetch circuit of the core of the processor 1204; decoding the first instruction into a first set of at least one micro-operation with a decoder circuit of the core 1206; sending the first set of at least one micro-operation from the decoder circuit to an execution circuit of the core 1208; storing a third set of at least one micro-operation for the third instruction in a section of a cache that stores context information from the core when the core is transitioned to a power state that shuts off voltage to the core 1210; storing a fourth set of at least one micro-operation for the fourth instruction in the section of the cache that stores context information from the core when the core is transitioned to the power state that shuts off voltage to the core 1212; sending, by a microcode sequencer of the core, a second set of at least one micro-operation stored in a read-only memory of the microcode sequencer for the second instruction to the execution circuit of the core 1214; loading, by the microcode sequencer of the core, the third set of at least one micro-operation into a patch memory of the microcode sequencer from the section of the cache when the first value is stored in the patch control field of the control register, and sending, by the microcode sequencer of the core, the third set of at least one micro-operation from the patch memory to the execution circuit when the first value is stored in the patch control field of the control register 1216; loading, by the microcode sequencer of the core, the fourth set of at least one micro-operation into the patch memory of the microcode sequencer from the section of the cache when the second value is stored in the patch control field of the control register, and sending, by the microcode sequencer of the core, the fourth set of at least one micro-operation from the patch memory to the execution circuit when the second value is stored in the patch control field of the control register 1218; and executing the first set, the second set, and the third set or the fourth set of micro-operations with the execution circuit of the core 1220.

In one embodiment, a processor includes a core; a cache having a section (e.g., not accessible by a user) to store context information from the core when the core is transitioned to a power state that shuts off voltage to the core; a fetch circuit of the core to fetch a first instruction, a second instruction, and a third instruction; a decoder circuit of the core coupled to the fetch circuit to decode (e.g., without using a microcode sequencer) the first instruction into a first set of at least one micro-operation; an execution circuit to execute micro-operations; and a microcode sequencer of the core coupled to the fetch circuit (and/or decoder circuit) and comprising a patch memory and a read-only memory (e.g., that are not accessible by the user) that stores a plurality of micro-operations, wherein the microcode sequencer sends, to the execution circuit, a second set of at least one micro-operation from the plurality of micro-operations stored in the read-only memory for the second instruction received from the fetch circuit, and causes, for the third instruction received from the fetch circuit, a third set of at least one micro-operation to be loaded into the patch memory from the section of the cache, and sends, to the execution circuit, the third set of at least one micro-operation from the patch memory. The power state may be a C6 (or deeper) power state according to an Advanced Configuration and Power Interface (ACPI) standard. The patch memory may include a fourth set of at least one micro-operation (e.g., enhanced patch code) for the third instruction that, when the microcode sequencer causes the fourth set to be executed, causes the third set of at least one micro-operation to be loaded into the patch memory from the section of the cache. Firmware, stored in non-transitory storage (e.g., hardware initialization manager storage) coupled to the processor, may include an instruction that when decoded and executed by the processor causes the processor to insert the fourth set of at least one micro-operation into the patch memory for the third instruction. The third set of at least one micro-operation loaded into the patch memory may overwrite at least one of a plurality of micro-operations stored in the patch memory, and the microcode sequencer may reload the at least one of the plurality of micro-operations that were overwritten when execution of the third set of at least one micro-operation is complete. The microcode sequencer may cause, for a fourth instruction fetched by the fetch circuit, a fourth set of at least one micro-operation, different than the third set, to be loaded into the patch memory from the section of the cache, and send, to the execution circuit, the fourth set of at least one micro-operation from the patch memory. The processor may include a system memory comprising a copy of the third set of at least one micro-operation coupled to the processor, wherein the patch memory comprises a fourth set of at least one micro-operation that, when the microcode sequencer causes the fourth set to be executed, causes the third set of at least one micro-operation to be loaded (e.g., only after decryption and authentication) into the section of the cache from the system memory. The microcode sequencer may cause the fourth set to be executed when the core is transitioned to a power state (e.g., ACPI C0) that turns on the voltage to the core.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, May 2018; and see Intel^{®} Architecture Instruction Set Extensions Programming Reference, May 2018).

Example Core Architectures - In-order and out-of-order core block diagram.

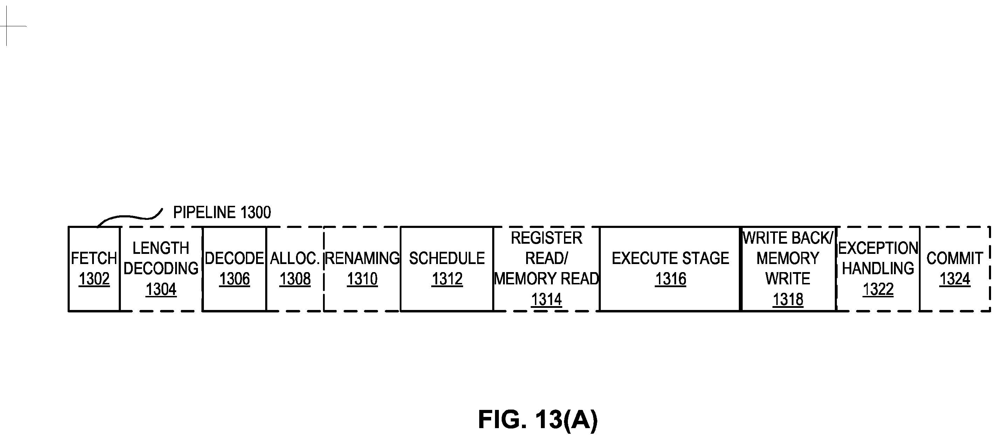

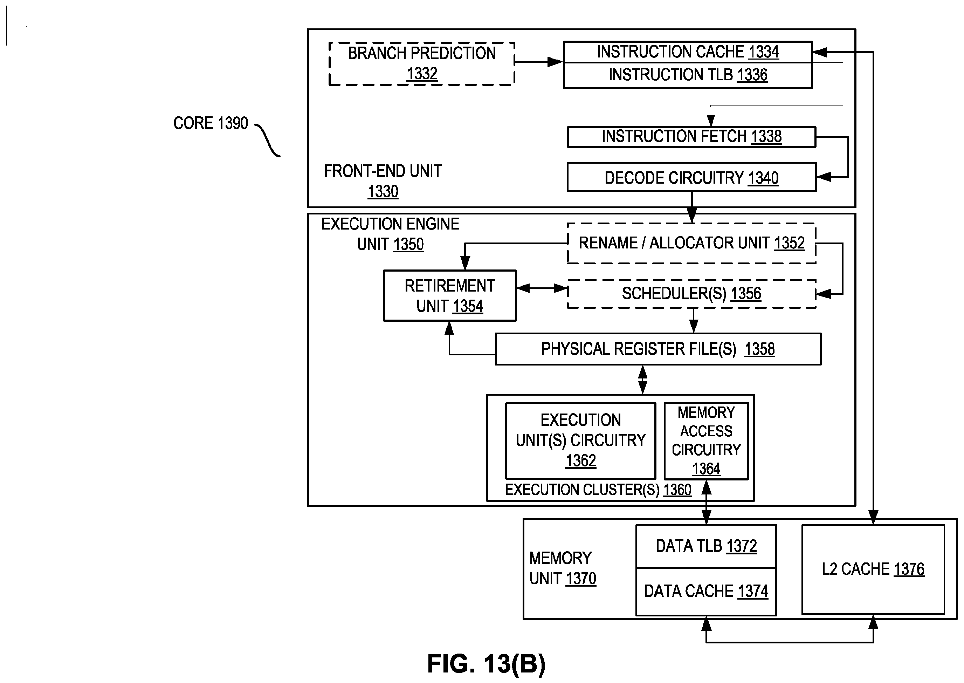

Figure 13(A) is a block diagram illustrating both an example in-order pipeline and an example register renaming, out-of-order issue/execution pipeline according to examples. Figure 13(B) is a block diagram illustrating both an example in-order architecture core and an example register renaming, out-of-order issue/execution architecture core to be included in a processor according to examples. The solid lined boxes in Figures 13(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 13(A), a processor pipeline 1300 includes a fetch stage 1302, an optional length decoding stage 1304, a decode stage 1306, an optional allocation (Alloc) stage 1308, an optional renaming stage 1310, a schedule (also known as a dispatch or issue) stage 1312, an optional register read/memory read stage 1314, an execute stage 1316, a write back/memory write stage 1318, an optional exception handling stage 1322, and an optional commit stage 1324. One or more operations can be performed in each of these processor pipeline stages. For example, during the fetch stage 1302, one or more instructions are fetched from instruction memory, and during the decode stage 1306, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1306 and the register read/memory read stage 1314 may be combined into one pipeline stage. In some examples, during the execute stage 1316, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of Figure 13(B) may implement the pipeline 1300 as follows: 1) the instruction fetch circuitry 1338 performs the fetch and length decoding stages 1302 and 1304; 2) the decode circuitry 1340 performs the decode stage 1306; 3) the rename/allocator unit circuitry 1352 performs the allocation stage 1308 and renaming stage 1310; 4) the scheduler(s) circuitry 1356 performs the schedule stage 1312; 5) the physical register file(s) circuitry 1358 and the memory unit circuitry 1370 perform the register read/memory read stage 1314; the execution cluster(s) 1360 perform the execute stage 1316; 6) the memory unit circuitry 1370 and the physical register file(s) circuitry 1358 perform the write back/memory write stage 1318; 7) various circuitry may be involved in the exception handling stage 1322; and 8) the retirement unit circuitry 1354 and the physical register file(s) circuitry 1358 perform the commit stage 1324.

Figure 13(B) shows a processor core 1390 including front-end unit circuitry 1330 coupled to execution engine unit circuitry 1350, and both are coupled to memory unit circuitry 1370. The core 1390 may be a reduced instruction set architecture computing (RISC) core, a complex instruction set architecture computing (CISC) core, a very long instruction word (VLIW) core, or a hybrid or alternative core type. As yet another option, the core 1390 may be a special-purpose core, such as, for example, a network or communication core, compression engine, coprocessor core, general purpose computing graphics processing unit (GPGPU) core, graphics core, or the like.

The front-end unit circuitry 1330 may include branch prediction circuitry 1332 coupled to instruction cache circuitry 1334, which is coupled to an instruction translation lookaside buffer (TLB) 1336, which is coupled to instruction fetch circuitry 1338, which is coupled to decode circuitry 1340. In some examples, the instruction cache circuitry 1334 is included in the memory unit circuitry 1370 rather than the front-end circuitry 1330. The decode circuitry 1340 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1340 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1340 may be implemented using various different mechanisms. Examples of suitable mechanisms include, but are not limited to, look-up tables, hardware implementations, programmable logic arrays (PLAs), microcode read only memories (ROMs), etc. In some examples, the core 1390 includes a microcode ROM (not shown) or other medium that stores microcode for certain macroinstructions (e.g., in decode circuitry 1340 or otherwise within the front-end circuitry 1330). In some examples, the decode circuitry 1340 includes a micro-operation (micro-op) or operation cache (not shown) to hold/cache decoded operations, micro-tags, or micro-operations generated during the decode or other stages of the processor pipeline 1300. The decode circuitry 1340 may be coupled to rename/allocator unit circuitry 1352 in the execution engine circuitry 1350.

The execution engine circuitry 1350 includes the rename/allocator unit circuitry 1352 coupled to retirement unit circuitry 1354 and a set of one or more scheduler(s) circuitry 1356. The scheduler(s) circuitry 1356 represents any number of different schedulers, including reservations stations, central instruction window, etc. In some examples, the scheduler(s) circuitry 1356 can include arithmetic logic unit (ALU) scheduler/scheduling circuitry, ALU queues, address generation unit (AGU) scheduler/scheduling circuitry, AGU queues, etc. The scheduler(s) circuitry 1356 is coupled to the physical register file(s) circuitry 1358. Each of the physical register file(s) circuitry 1358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 1358 includes vector registers unit circuitry, writemask registers unit circuitry, and scalar register unit circuitry. These register units may provide architectural vector registers, vector mask registers, general-purpose registers, etc. The physical register file(s) circuitry 1358 is coupled to the retirement unit circuitry 1354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1354 and the physical register file(s) circuitry 1358 are coupled to the execution cluster(s) 1360. The execution cluster(s) 1360 includes a set of one or more execution unit(s) circuitry 1362 and a set of one or more memory access circuitry 1364. The execution unit(s) circuitry 1362 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1356, physical register file(s) circuitry 1358, and execution cluster(s) 1360 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1364). It should also be understood that where separate pipelines are used, one or more of these pipelines may be out-of-order issue/execution and the rest in-order.

In some examples, the execution engine unit circuitry 1350 may perform load store unit (LSU) address/data pipelining to an Advanced Microcontroller Bus (AMB) interface (not shown), and address phase and writeback, data phase load, store, and branches.

The set of memory access circuitry 1364 is coupled to the memory unit circuitry 1370, which includes data TLB circuitry 1372 coupled to data cache circuitry 1374 coupled to level 2 (L2) cache circuitry 1376. In some examples, the memory access circuitry 1364 may include load unit circuitry, store address unit circuitry, and store data unit circuitry, each of which is coupled to the data TLB circuitry 1372 in the memory unit circuitry 1370. The instruction cache circuitry 1334 is further coupled to the level 2 (L2) cache circuitry 1376 in the memory unit circuitry 1370. In some examples, the instruction cache 1334 and the data cache 1374 are combined into a single instruction and data cache (not shown) in L2 cache circuitry 1376, level 3 (L3) cache circuitry (not shown), and/or main memory. The L2 cache circuitry 1376 is coupled to one or more other levels of cache and eventually to a main memory.

The core 1390 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 1390 includes logic to support a packed data instruction set architecture extension (e.g., AVX1, AVX2), thereby allowing the operations used by many multimedia applications to be performed using packed data.

### Example Execution Unit(s) Circuitry.

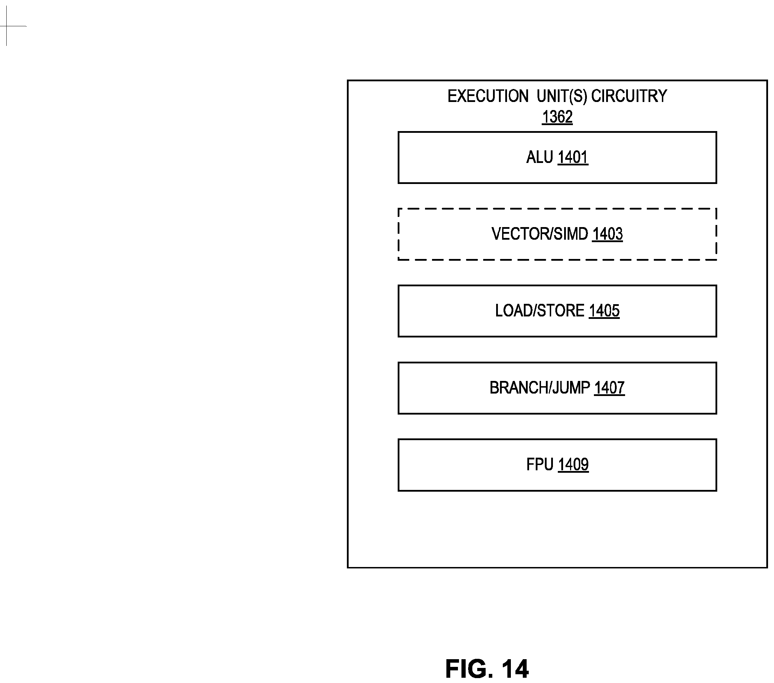

Figure 14 illustrates examples of execution unit(s) circuitry, such as execution unit(s) circuitry 1362 of Figure 13(B). As illustrated, execution unit(s) circuity 1362 may include one or more ALU circuits 1401, optional vector/single instruction multiple data (SIMD) circuits 1403, load/store circuits 1405, branch/jump circuits 1407, and/or Floating-point unit (FPU) circuits 1409. ALU circuits 1401 perform integer arithmetic and/or Boolean operations. Vector/SIMD circuits 1403 perform vector/SIMD operations on packed data (such as SIMD/vector registers). Load/store circuits 1405 execute load and store instructions to load data from memory into registers or store from registers to memory. Load/store circuits 1405 may also generate addresses. Branch/jump circuits 1407 cause a branch or jump to a memory address depending on the instruction. FPU circuits 1409 perform floating-point arithmetic. The width of the execution unit(s) circuitry 1362 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

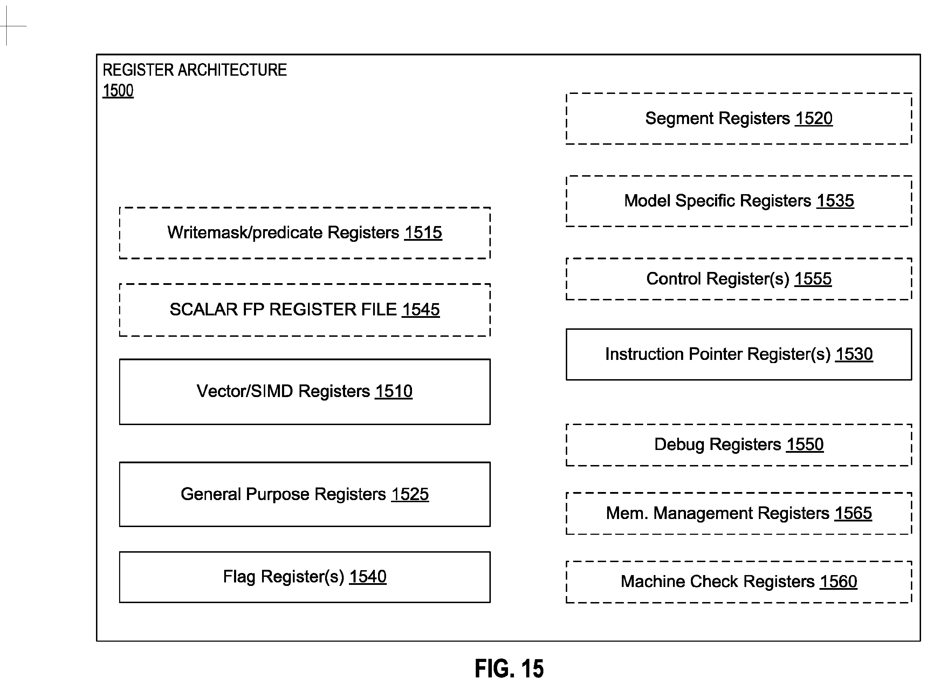

Figure 15 is a block diagram of a register architecture 1500 according to some examples. As illustrated, the register architecture 1500 includes vector/SIMD registers 1510 that vary from 128-bit to 1,024 bits width. In some examples, the vector/SIMD registers 1510 are physically 512-bits and, depending upon the mapping, only some of the lower bits are used. For example, in some examples, the vector/SIMD registers 1510 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1500 includes writemask/predicate registers 1515. For example, in some examples, there are 8 writemask/predicate registers (sometimes called k0 through k7) that are each 16-bit, 32-bit, 64-bit, or 128-bit in size. Writemask/predicate registers 1515 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1515 corresponds to a data element position of the destination. In other examples, the writemask/predicate registers 1515 are scalable and consists of a set number of enable bits for a given vector element (e.g., 8 enable bits per 64-bit vector element).

The register architecture 1500 includes a plurality of general-purpose registers 1525. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1500 includes scalar floating-point (FP) register file 1545 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1540 (e.g., EFLAGS, RFLAGS, etc.) store status and control information for arithmetic, compare, and system operations. For example, the one or more flag registers 1540 may store condition code information such as carry, parity, auxiliary carry, zero, sign, and overflow. In some examples, the one or more flag registers 1540 are called program status and control registers.

Segment registers 1520 contain segment points for use in accessing memory. In some examples, these registers are referenced by the names CS, DS, SS, ES, FS, and GS.

Model specific registers or machine specific registers (MSRs) 1535 control and report on processor performance. Most MSRs 1535 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1560 consist of control, status, and error reporting MSRs that are used to detect and report on hardware errors. Control register(s) 1555 (e.g., CR0-CR4) determine the operating mode of a processor (e.g., processor 'BPA70, 'BPA80, 'BPA38, 'BPA15, and/or 'BPB00) and the characteristics of a currently executing task. In some examples, MSRs 1535 are a subset of control registers 1555.

One or more instruction pointer register(s) 1530 store an instruction pointer value. Debug registers 1550 control and allow for the monitoring of a processor or core's debugging operations.

Memory (mem) management registers 1565 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1500 may, for example, be used in register file / memory 'ISAB08, or physical register file(s) circuitry 13 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

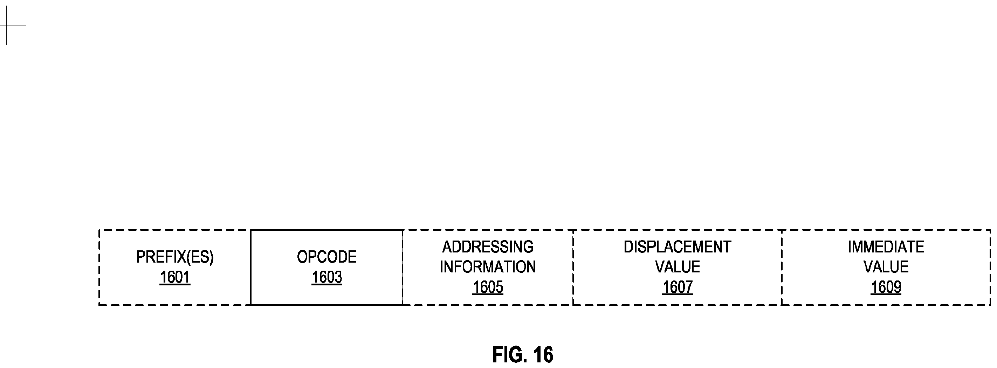

Figure 16 illustrates examples of an instruction format. As illustrated, an instruction may include multiple components including, but not limited to, one or more fields for: one or more prefixes 1601, an opcode 1603, addressing information 1605 (e.g., register identifiers, memory addressing information, etc.), a displacement value 1607, and/or an immediate value 1609. Note that some instructions utilize some or all the fields of the format whereas others may only use the field for the opcode 1603. In some examples, the order illustrated is the order in which these fields are to be encoded, however, it should be appreciated that in other examples these fields may be encoded in a different order, combined, etc.

The prefix(es) field(s) 1601, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1603 is used to at least partially define the operation to be performed upon a decoding of the instruction. In some examples, a primary opcode encoded in the opcode field 1603 is one, two, or three bytes in length. In other examples, a primary opcode can be a different length. An additional 3-bit opcode field is sometimes encoded in another field.

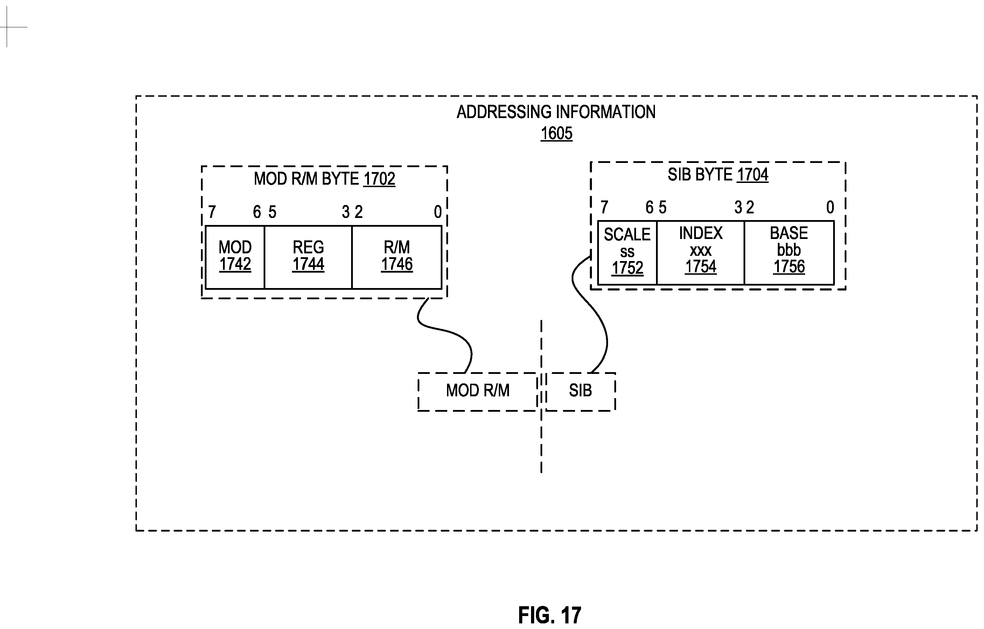

The addressing information field 1605 is used to address one or more operands of the instruction, such as a location in memory or one or more registers. Figure 17 illustrates examples of the addressing information field 1605. In this illustration, an optional MOD R/M byte 1702 and an optional Scale, Index, Base (SIB) byte 1704 are shown. The MOD R/M byte 1702 and the SIB byte 1704 are used to encode up to two operands of an instruction, each of which is a direct register or effective memory address. Note that both of these fields are optional in that not all instructions include one or more of these fields. The MOD R/M byte 1702 includes a MOD field 1742, a register (reg) field 1744, and R/M field 1746.

The content of the MOD field 1742 distinguishes between memory access and non-memory access modes. In some examples, when the MOD field 1742 has a binary value of 11 (11b), a register-direct addressing mode is utilized, and otherwise a register-indirect addressing mode is used.

The register field 1744 may encode either the destination register operand or a source register operand or may encode an opcode extension and not be used to encode any instruction operand. The content of register field 1744, directly or through address generation, specifies the locations of a source or destination operand (either in a register or in memory). In some examples, the register field 1744 is supplemented with an additional bit from a prefix (e.g., prefix 1601) to allow for greater addressing.

The R/M field 1746 may be used to encode an instruction operand that references a memory address or may be used to encode either the destination register operand or a source register operand. Note the R/M field 1746 may be combined with the MOD field 1742 to dictate an addressing mode in some examples.

The SIB byte 1704 includes a scale field 1752, an index field 1754, and a base field 1756 to be used in the generation of an address. The scale field 1752 indicates a scaling factor. The index field 1754 specifies an index register to use. In some examples, the index field 1754 is supplemented with an additional bit from a prefix (e.g., prefix 1601) to allow for greater addressing. The base field 1756 specifies a base register to use. In some examples, the base field 1756 is supplemented with an additional bit from a prefix (e.g., prefix 1601) to allow for greater addressing. In practice, the content of the scale field 1752 allows for the scaling of the content of the index field 1754 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1607 provides this value. Additionally, in some examples, a displacement factor usage is encoded in the MOD field of the addressing information field 1605 that indicates a compressed displacement scheme for which a displacement value is calculated and stored in the displacement field 1607.

In some examples, the immediate value field 1609 specifies an immediate value for the instruction. An immediate value may be encoded as a 1-byte value, a 2-byte value, a 4-byte value, etc.

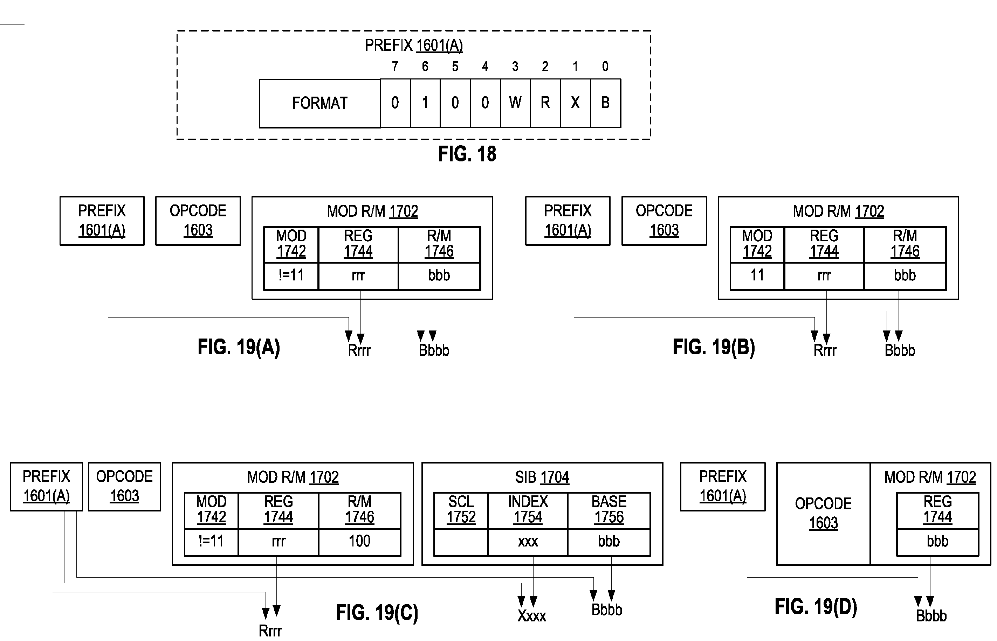

Figure 18 illustrates examples of a first prefix 1601(A). In some examples, the first prefix 1601(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1601(A) may specify up to three registers using 3-bit fields depending on the format: 1) using the reg field 1744 and the R/M field 1746 of the MOD R/M byte 1702; 2) using the MOD R/M byte 1702 with the SIB byte 1704 including using the reg field 1744 and the base field 1756 and index field 1754; or 3) using the register field of an opcode.

In the first prefix 1601(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1744 and MOD R/M R/M field 1746 alone can each only address 8 registers.

In the first prefix 1601(A), bit position 2 (R) may be an extension of the MOD R/M reg field 1744 and may be used to modify the MOD R/M reg field 1744 when that field encodes a general-purpose register, a 64-bit packed data register (e.g., a SSE register), or a control or debug register. R is ignored when MOD R/M byte 1702 specifies other registers or defines an extended opcode.

### Bit position 1 (X) may modify the SIB byte index field 1754.

Bit position 0 (B) may modify the base in the MOD R/M R/M field 1746 or the SIB byte base field 1756; or it may modify the opcode register field used for accessing general purpose registers (e.g., general purpose registers 1525).

Figures 19(A)-(D) illustrate examples of how the R, X, and B fields of the first prefix 1601(A) are used. Figure 19(A) illustrates R and B from the first prefix 1601(A) being used to extend the reg field 1744 and R/M field 1746 of the MOD R/M byte 1702 when the SIB byte 17 04 is not used for memory addressing. Figure 19(B) illustrates R and B from the first prefix 1601(A) being used to extend the reg field 1744 and R/M field 1746 of the MOD R/M byte 1702 when the SIB byte 17 04 is not used (register-register addressing). Figure 19(C) illustrates R, X, and B from the first prefix 1601(A) being used to extend the reg field 1744 of the MOD R/M byte 1702 and the index field 1754 and base field 1756 when the SIB byte 17 04 being used for memory addressing. Figure 19(D) illustrates B from the first prefix 1601(A) being used to extend the reg field 1744 of the MOD R/M byte 1702 when a register is encoded in the opcode 1603.

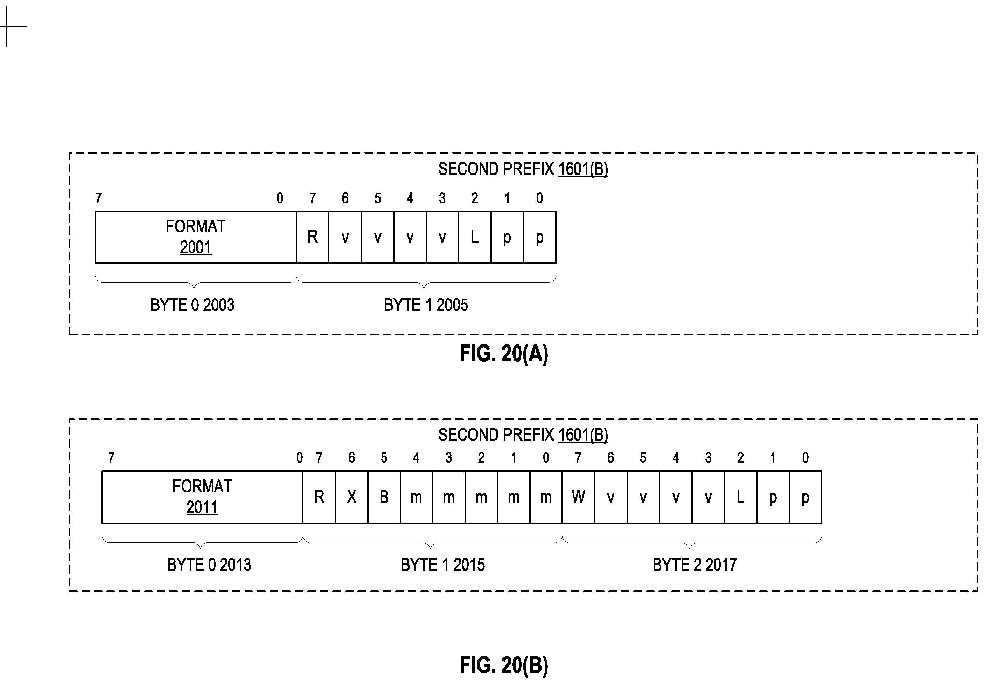

Figures 20(A)-(B) illustrate examples of a second prefix 1601(B). In some examples, the second prefix 1601(B) is an example of a VEX prefix. The second prefix 1601(B) encoding allows instructions to have more than two operands, and allows SIMD vector registers (e.g., vector/SIMD registers 1510) to be longer than 64-bits (e.g., 128-bit and 256-bit). The use of the second prefix 1601(B) provides for three-operand (or more) syntax. For example, previous two-operand instructions performed operations such as A = A + B, which overwrites a source operand. The use of the second prefix 1601(B) enables operands to perform nondestructive operations such as A = B + C.

In some examples, the second prefix 1601(B) comes in two forms - a two-byte form and a three-byte form. The two-byte second prefix 1601(B) is used mainly for 128-bit, scalar, and some 256-bit instructions; while the three-byte second prefix 1601(B) provides a compact replacement of the first prefix 1601(A) and 3-byte opcode instructions.

Figure 20(A) illustrates examples of a two-byte form of the second prefix 1601(B). In some examples, a format field 2001 (byte 0 2003) contains the value C5H. In some examples, byte 1 2005 includes an "R" value in bit[7]. This value is the complement of the "R" value of the first prefix 1601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1746 to encode the instruction operand that references a memory address or encode either the destination register operand or a source register operand.

Instructions that use this prefix may use the MOD R/M reg field 1744 to encode either the destination register operand or a source register operand, or to be treated as an opcode extension and not used to encode any instruction operand.

For instruction syntax that support four operands, vvvv, the MOD R/M R/M field 1746 and the MOD R/M reg field 1744 encode three of the four operands. Bits[7:4] of the immediate value field 1609 are then used to encode the third source register operand.

Figure 20(B) illustrates examples of a three-byte form of the second prefix 1601(B). In some examples, a format field 2011 (byte 0 2013) contains the value C4H. Byte 1 2015 includes in bits[7:5] "R," "X," and "B" which are the complements of the same values of the first prefix 1601(A). Bits[4:0] of byte 1 2015 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2017 is used similar to W of the first prefix 1601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1746 to encode the instruction operand that references a memory address or encode either the destination register operand or a source register operand.

Instructions that use this prefix may use the MOD R/M reg field 1744 to encode either the destination register operand or a source register operand, or to be treated as an opcode extension and not used to encode any instruction operand.

For instruction syntax that support four operands, vvvv, the MOD R/M R/M field 1746, and the MOD R/M reg field 1744 encode three of the four operands. Bits[7:4] of the immediate value field 1609 are then used to encode the third source register operand.

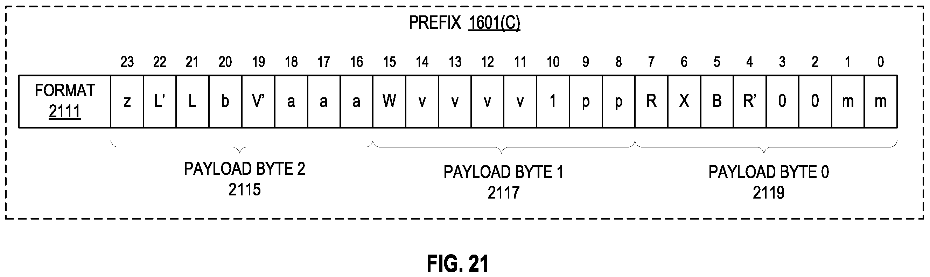

Figure 21 illustrates examples of a third prefix 1601(C). In some examples, the third prefix 1601(C) is an example of an EVEX prefix. The third prefix 1601(C) is a four-byte prefix.

The third prefix 1601(C) can encode 32 vector registers (e.g., 128-bit, 256-bit, and 512-bit registers) in 64-bit mode. In some examples, instructions that utilize a writemask/opmask (see discussion of registers in a previous figure, such as Figure 15) or predication utilize this prefix. Opmask register allow for conditional processing or selection control. Opmask instructions, whose source/destination operands are opmask registers and treat the content of an opmask register as a single value, are encoded using the second prefix 1601(B).

The third prefix 1601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1601(C) is a format field 2111 that has a value, in some examples, of 62H. Subsequent bytes are referred to as payload bytes 2115-2119 and collectively form a 24-bit value of P[23:0] providing specific capability in the form of one or more fields (detailed herein).

In some examples, P[1:0] of payload byte 2119 are identical to the low two mm bits. P[3:2] are reserved in some examples. Bit P[4] (R') allows access to the high 16 vector register set when combined with P[7] and the MOD R/M reg field 1744. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1744 and MOD R/M R/M field 1746. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1601(A) and second prefix 1611(B) and may serve as an opcode extension bit or operand size promotion.

P[18:16] specify the index of a register in the opmask (writemask) registers (e.g., writemask/predicate registers 1515). In some examples, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1601(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

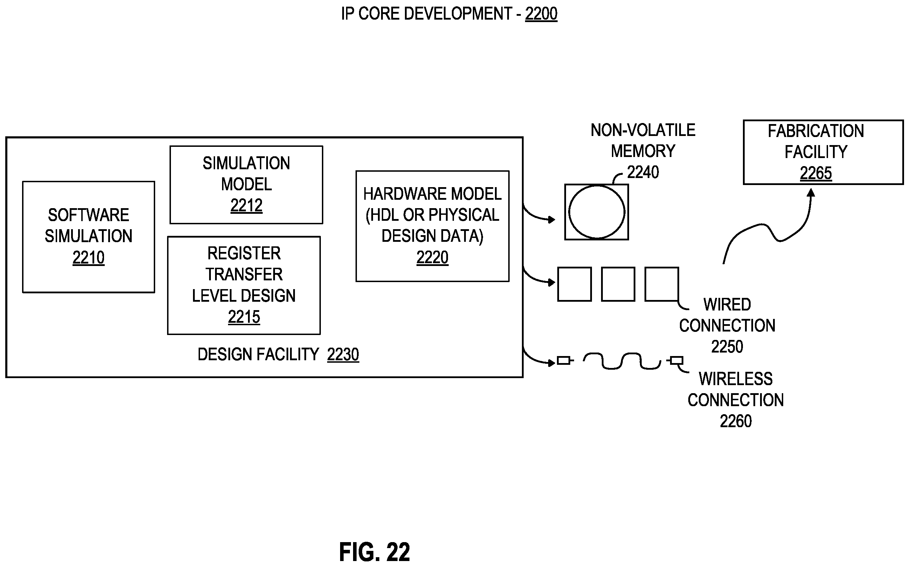

Figure 22 is a block diagram illustrating an IP core development system 2200 that may be used to manufacture an integrated circuit to perform operations according to some examples. The IP core development system 2200 may be used to generate modular, re-usable designs that can be incorporated into a larger design or used to construct an entire integrated circuit (e.g., an SOC integrated circuit). A design facility 2230 can generate a software simulation 2210 of an IP core design in a high-level programming language (e.g., C/C++). The software simulation 2210 can be used to design, test, and verify the behavior of the IP core using a simulation model 2212. The simulation model 2212 may include functional, behavioral, and/or timing simulations. A register transfer level (RTL) design 2215 can then be created or synthesized from the simulation model 2212. The RTL design 2215 is an abstraction of the behavior of the integrated circuit that models the flow of digital signals between hardware registers, including the associated logic performed using the modeled digital signals. In addition to an RTL design 2215, lower-level designs at the logic level or transistor level may also be created, designed, or synthesized. Thus, the particular details of the initial design and simulation may vary.

The RTL design 2215 or equivalent may be further synthesized by the design facility into a hardware model 2220, which may be in a hardware description language (HDL), or some other representation of physical design data. The HDL may be further simulated or tested to verify the IP core design. The IP core design can be stored for delivery to a 3^{rd} party fabrication facility 2265 using non-volatile memory 2240 (e.g., hard disk, flash memory, or any non-volatile storage medium). Alternatively, the IP core design may be transmitted (e.g., via the Internet) over a wired connection 2250 or wireless connection 2260. The fabrication facility 2265 may then fabricate an integrated circuit that is based at least in part on the IP core design. The fabricated integrated circuit can be configured to perform operations in accordance with at least some examples described herein.

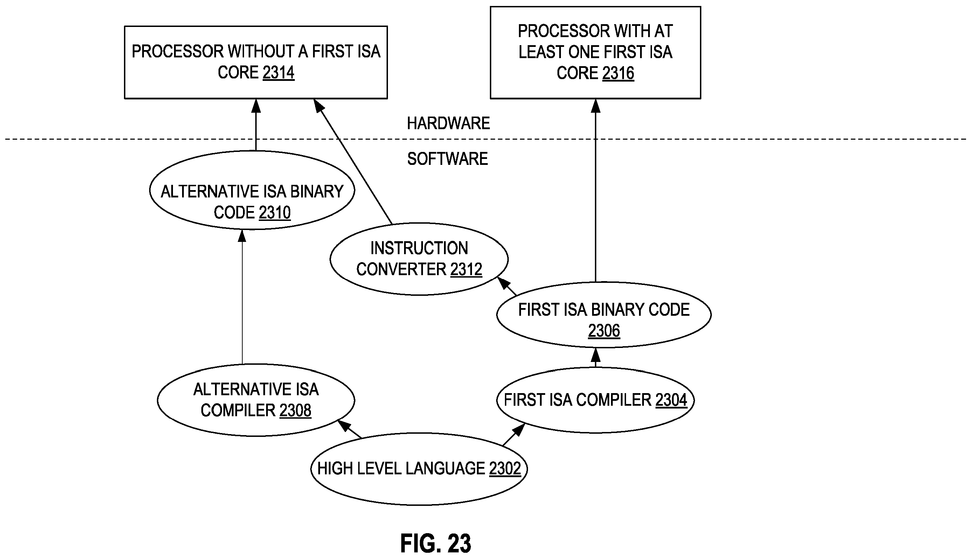

Figure 23 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. Figure 23 shows a program in a high-level language 2302 may be compiled using a first ISA compiler 2304 to generate first ISA binary code 2306 that may be natively executed by a processor with at least one first ISA core 2316. The processor with at least one first ISA core 2316 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2304 represents a compiler that is operable to generate first ISA binary code 2306 (e.g., object code) that can, with or without additional linkage processing, be executed on the processor with at least one first ISA core 2316. Similarly, Figure 23 shows the program in the high-level language 2302 may be compiled using an alternative ISA compiler 2308 to generate alternative ISA binary code 2310 that may be natively executed by a processor without a first ISA core 2314. The instruction converter 2312 is used to convert the first ISA binary code 2306 into code that may be natively executed by the processor without a first ISA core 2314. This converted code is not necessarily to be the same as the alternative ISA binary code 2310; however, the converted code will accomplish the general operation and be made up of instructions from the alternative ISA. Thus, the instruction converter 2312 represents software, firmware, hardware, or a combination thereof that, through emulation, simulation or any other process, allows a processor or other electronic device that does not have a first ISA processor or core to execute the first ISA binary code 2306.

### SYSTEM AND METHOD FOR AUTHENTICATING EXTENDED SERVICE MICROCODE UPDATES

As described above, some implementations support the release of processor microcode updates in the field, potentially several years after a processor is purchased. In general, when the processor manufacturer discontinues services for a processor generation it also discontinues microcode updates. In some cases, however, the processor manufacturer may extend service and continue to release microcode updates for certain customers who are willing to pay for an extended service license. The problem is that there is no enforcement mechanism to prevent these extended service microcode updates from being used by customers who did not pay for the extended service.

In accordance with embodiments of the invention, a customer may purchase an extended service license from the processor manufacturer. The processor is then updated to reflect the new license, including the time period associated with the extended service. Once updated, the processor will report the extended service capabilities and an the period for which the extended service is valid.

When the processor manufacturer subsequently releases microcode updates, these updates are securely marked as being associated with extended service capabilities. These extended service microcode updates are prevented from being loaded on a processor which does not have the requisite license installed.

Some embodiments provide enumeration of the extended service support through one or more architectural capability registers (e.g., MSRs) which report the extended service support period. Some implementations also include a new microcode update format that indicates the extended service period supported by the microcode update.

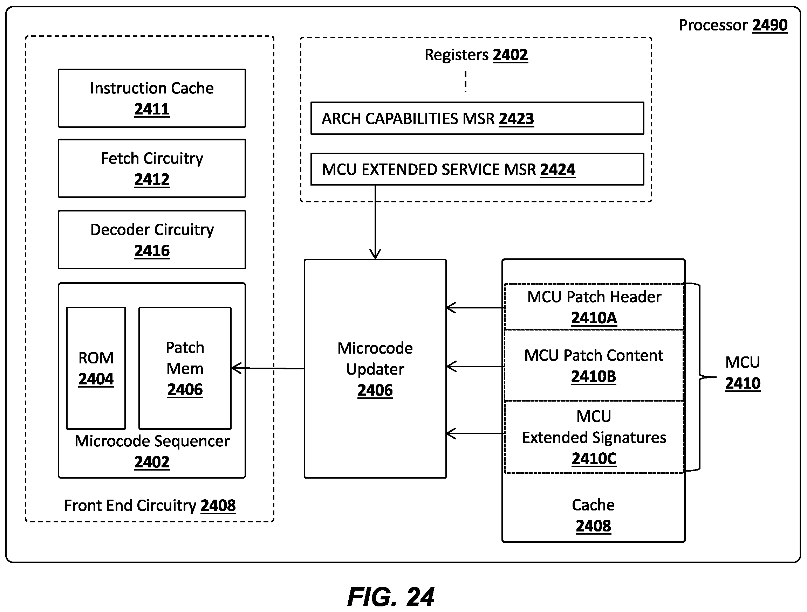

One embodiment will be described with respect to Figure 24 which shows front end circuitry 2408 of a processor 2490 including an instruction cache 2411 for storing instructions to be executed, fetch circuitry 2412 for fetching instructions from the instruction cache 2412 and/or a cache/memory subsystem, decoder circuitry 2416 for decoding the instructions, and a microcode sequencer 2402 for responsively generating sequences of microoperations corresponding to each decoded instruction based on a microcode ROM 2404 and a patch memory 2406.

A microcode updater 2406 implements one or more of the techniques described herein to update the patch memory 2406 which stores microcode patches. The microcode sequencer 2402 uses the microcode patches in combination with the original microcode stored in the ROM 2404 to produce microcode sequences for each decoded instruction. The microcode updater 2406 may be implemented in hardware, software/firmware (e.g., system firmware or software), or any combination thereof, to provide new microcode updates as described herein.

The processor registers 2402 include model specific registers (MSRs), which store (among other things) configuration, status, and control data associated with the processor. MSRs may be package-scoped or core/logical processor scoped. The bits within package-scoped MSRs are associated with the entire processor package, whereas a core or logical processor scoped MSR applies to a particular core or logical processor.

In one embodiment, microcode update (MCU) changes are enumerated through the registers 2402. For example, an architecture capabilities MSR 2423 includes a plurality of bits to indicate the capabilities of the processor. In one particular embodiment, if bit [22] is set, this indicates that extended service is supported by the processor 2490. An MCU extended service MSR 2424 indicates the extended service available to the processor 2490.

In one embodiment, the microcode updater 2406 reads the extended service MSR 2424 to determine the supported service period for this processor 2490 (i.e., based on the installed license) to determine whether to install a particular MCU 2410. For example, the microcode updater 2406 may compare the information in the extended service MSR 2424 with information in the MCU patch header 2410A (stored in a cache 2408 or other accessible memory location) to determine whether the corresponding encrypted MCU patch content 2410B can be applied to the patch memory 2406. If the processor is authorized for the encrypted MCU patch content 2410B, then the microcode updater 2406 may perform additional validation/security operations (e.g., validating a hash included in the MCU patch header 2410A, decrypting the MCU patch content 2410B, etc) prior to applying the MCU patch content 2410B to the patch memory 2406. In some implementations, MCU extended processor signatures 2410C are appended to the end of the encrypted MCU patch content 2410B (e.g., in the form of an extended signature table) when multiple processor steppings and/or models are supported. The MCU extended processor signatures 2410C may be used in the validation process as described below.

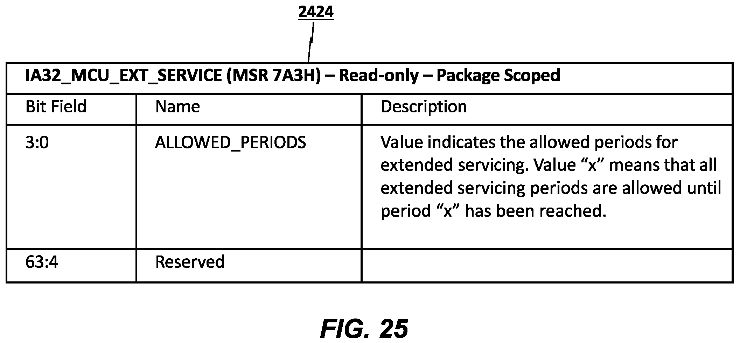

Figure 25 illustrates the format of one embodiment of the extended service MSR 2424. As indicated, in this embodiment, the extended service MSR 2424 is package-scoped and read-only. Four bits [3:0] indicate the permitted period(s) for extended servicing. For example, a particular value encoded in the four bits, *x*, means that extended servicing is permitted within period *x* for this processor 2490.

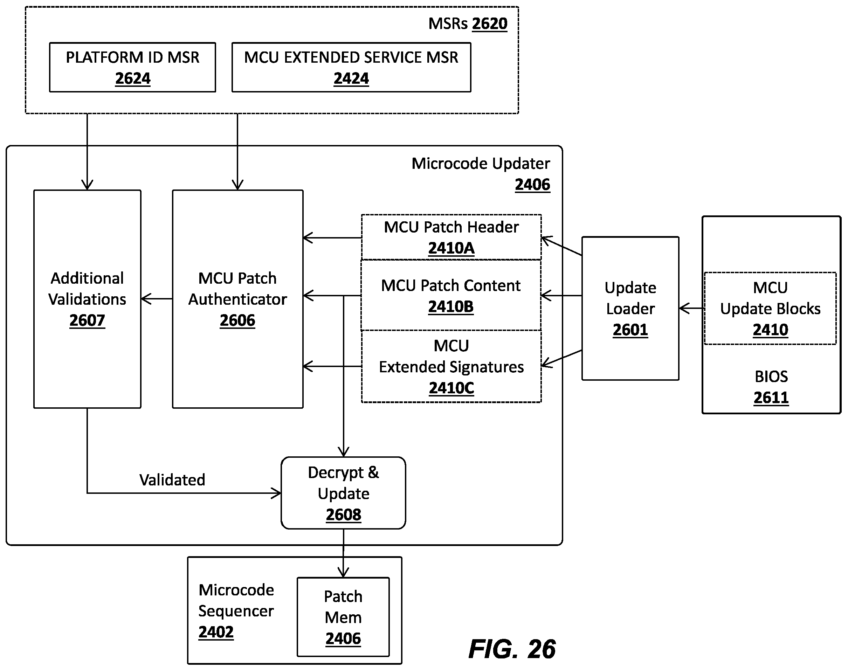

Figure 26 illustrates additional details of one embodiment. An update loader 2601 (e.g., from the BIOS 2611) loads the MCU update 2410 into a secure processor memory during system initialization (e.g., in a cache 2408 or other secure memory). The MCU update blocks 2410 are initially stored in a memory of the BIOS 2611 (e.g., in a non-volatile memory on a motherboard or other structure) and loaded to the processor memory by the update loader 2601 during initialization.

MCU patch authenticator 2606 performs various operations to authenticate the MCU patch 2410, using the information in the MCU patch header 2410A and potentially the MCU extended signatures 2410C. In one embodiment, new fields are included in the MCU patch header 2410A to indicate whether the MCU is an extended servicing MCU and the allowed periods in which the MCU patch content 2410B can be applied. The MCU patch authenticator 2606 compares the information in the relevant portions of these new fields with the corresponding information in the processor MSRs 2620 (e.g., such as the MCU extended service MSR 2424 and platform ID MSR 2624) to determine whether the MCU 2410 should be applied to the processor. This embodiment of the MCU patch header 2410A and extended signatures 2410C include support for a plurality of processor signatures and platform identifiers (e.g., signatures indicating the extended family, extended model, type, family, model, and stepping of each processor for which the MCU should be applied).

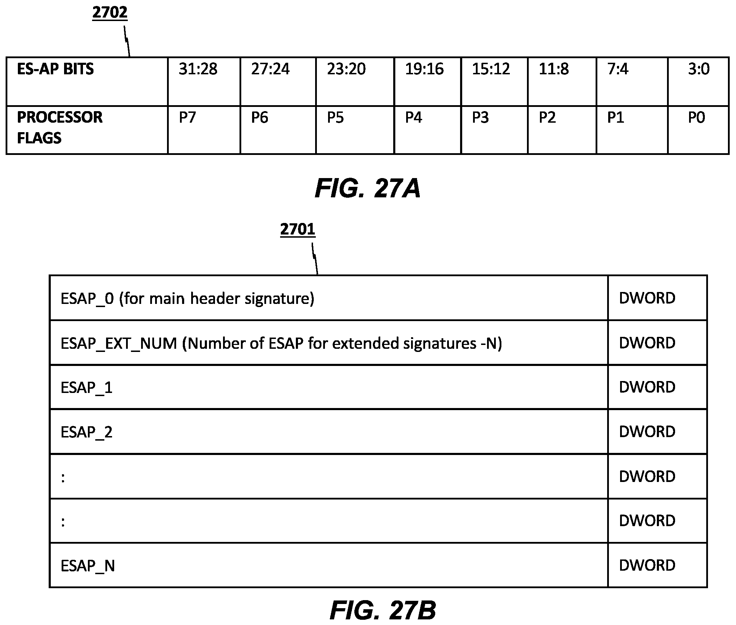

Figure 27A illustrates one embodiment of an extended service allowed period (ES-AP) field 2702 for a particular supported processor signature, a doubleword (32-bit) field with eight 4-bit sub-fields corresponding to eight processor flags (P0-P7). As used in this context, a processor "signature" comprises any information usable to identify the processor with a required level of specificity, such as one or more of: the processor type, family (including extended family), model (including extended model), and/or stepping. Each supported processor signature may be associated with a separate ES-AP doubleword such as the one shown in Figure 27A.

Figure 27B illustrates a data structure 2701 included in the MCU 2410 (e.g., in the header 2410A and/or extended signatures 2410C). The data structure 2710 includes a sequence of doubleword entries, including entries ESAP_1 to ESAP_N, each of which corresponds to a different supported processor signature and includes a set of ES-AP bits such as shown in Figure 27A. The first entry, ESAP_0 is used as the main header signature, and the second entry, ESAP_EXT_NUM indicates the number (N) of ESAP entries for processor signatures (ESAP_1 to ESAP_N).

The encoding of each ES-AP field 2702 associates a set of four bits with each of eight processor flags (P0 to P7) which correspond to different platform IDs. Each set of four bits indicates the allowed period per the corresponding platform ID. Thus, in addition to verifying the processor signature, the MCU patch authenticator 2606 determines the intended processor platform type to properly verify and target the microcode update 2410. In one embodiment, the MCU patch authenticator 2606 determines the processor platform type by reading three platform ID bits from the IA32_PLATFORM_ID register 2624 (e.g., reading bits [52:50] with a read MSR (RDMSR) instruction). These three bits, when read as a binary coded decimal (BCD) number, indicate the bit position of the 4-bit value in the corresponding ES-AP doubleword 2702.

In summary, one embodiment of the MCU patch authenticator 2606 verifies that the processor signature matches an MCU processor signature. It may also save an index of the processor signature in the MCU 2410 (e.g., to be used for matching at the extended signature block 2410C). The MCU patch authenticator 2606 then reads the platform identification information from the platform ID MSR 2624 to identify the processor flags corresponding to the matched processor signature. It checks the ES-AP field that corresponds to the matched processor signature and matched platform identification, reading the corresponding 4-bit value, which it compares to the value in the MCU extended service MSR 2424 to verify that the MCU 2410 can be applied to the processor. In one embodiment, the MCU 2410 can be applied if MCU.ESAP (the 4-bit value read from the ES-AP field) =< IA32_MCU_EXT_SERVICE[ALLOWED_PERIOD]. Once validated, an MCU with a higher revision ID than any existing MCU patch stored in the patch memory 2406 can be applied.

As indicated in Figure 26, following MCU authentication, one or more additional validations 2607 may be performed. For example, following validation by the MCU patch authenticator 2606, processor hardware may also verify that an MCU designated for an extended service period will not be loaded if the processor does not support the extended service period. In one embodiment, additional fields are included in the uCode internal header to be checked by the processor hardware after authentication by the MCU patch authenticator 2606.

If the update is validated by the additional validations 2607, then decrypt & update logic 2608 responsively installs the new MCU patch 2410 in the patch memory 2406. If the process succeeds, then WRMSR 79H (MCU load flow) succeeds; otherwise it silently fails.

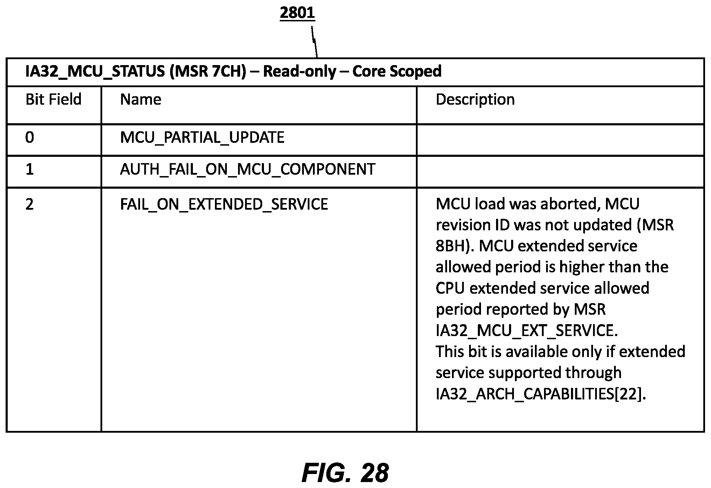

For processors which support an IA32_MCU_STATUS MSR (IA32_ARCH_CAPABILITY[16]) a new bit (#2) is used to report any such failure. As illustrated in Figure 28, if the MCU extended service period is greater than the processor's extended service period (as reported in the MCU_EXT_SERVICE MSR), then bit [2] is set to indicate the reason for the failure.

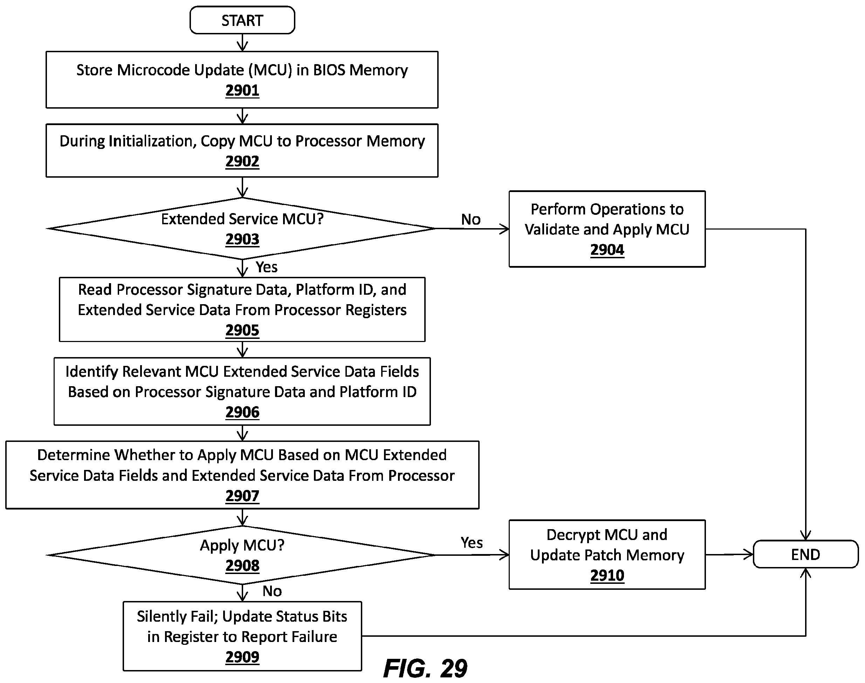

A method in accordance with one embodiment of the invention is illustrated in Figure 29. The method may be implemented on the various architectures described above, but is not limited to any particular processor or system architecture.

At 2901, microcode update (MCU) blocks are stored in BIOS memory, such as a Flash memory or other non-volatile BIOS memory. At 2902, during system initialization, the MCU is copied to a designated secure processor memory (e.g., a cache or other local memory).

If the MCU is not an extended service MCU, determined at 2903, then at 2904, operations are performed to validate and apply the MCU (e.g., as described with respect to Figures 1-12). If the MCU is an extended service MCU, then at 2905, processor signature data, platform ID, and extended service data is read from the processor (e.g., from specified processor MSRs). At 2906, the relevant extended service data fields are identified based on the processor signature data and platform ID. In one embodiment, for example, a particular group of 4-bit data fields is identified with the processor signature and a particular 4-bit data field is identified from the group based on the platform ID. In this embodiment, the 4-bit data field indicates the extended service period associated with the MCU.

At 2907, a determination is made as to whether to apply the MCU based on a comparison of the MCU extended service data field and the extended service data from the processor (e.g., read from the extended service MSR). If the 4-bit extended service data field indicates an extended service period which is later than the extended service data from the processor, then the request to update is silently failed at 2909. Status bits may also be updated to reflect the failure.

If the MCU extended service data field indicates an extended service period which is less than or equal to the extended service period indicated by the processor (e.g., MCU.ESAP =< IA32_MCU_EXT_SERVICE [ALLOWED_PERIOD]), then the MCU is applied to the processor. At 2910 the MCU is decrypted and the patch memory of the microsequencer is updated (as described above).

Program code may be applied to input instructions to perform the functions described herein and generate output information. The output information may be applied to one or more output devices, in known fashion. For purposes of this application, a processing system includes any system that has a processor, such as, for example, general purpose computing device, a digital signal processor (DSP), a microcontroller, an application specific integrated circuit (ASIC), or a microprocessor (e.g., a system-on-chip or SoC).

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

### EXAMPLES

The following are example implementations of different embodiments of the invention.

Example 1. A method comprising: loading an extended service microcode update (MCU) to a memory of a processor; reading processor identification data and processor extended service data from one or more registers of the processor; identifying in the MCU an MCU extended service value based on the processor identification data; and determining whether to apply the extended service MCU on the processor based on a comparison between the MCU extended service value and the processor extended service data.

Example 2. The method of example 1 wherein the processor identification data comprises processor signature data and platform identification data.

Example 3. The method of examples 1 or 2 wherein identifying the MCU extended service value comprises: identifying an entry in an MCU data structure corresponding to the processor signature data; and identifying a field within the entry based on the platform identification data, the field encoding the MCU extended service value.

Example 4. The method of any of examples 1-3 wherein the platform identification data comprises N bits read from a processor register, wherein identifying a field comprises using the N bits to identify a processor flag of 2^{N} processor flags, the processor flag associated with the field.

Example 5. The method of any of examples 1-4 wherein the processor signature data comprises data indicating one or more of: an extended family, an extended model, a type, a family, a model, and a stepping.

Example 6. The method of any of examples 1-5 wherein the extended service MCU is applied to the processor if the MCU extended service value is less than or equal to a value of the processor extended service data.

Example 7. The method of any of examples 1-6 wherein the extended service MCU is applied to the processor by writing to a microcode patch memory of a microsequencer of the processor.

Example 8. The method of any of examples 1-7 wherein the value of the processor extended service data comprises an M-bit value read from a processor register and the MCU extended service value comprises an M-bit value read from a header of the MCU.

Example 9. The method of any of examples 1 to 8 wherein responsive to a purchase of an extended license for the processor, the processor extended service data is to be updated to include an updated value, the updated value to be compared with the MCU extended service value in a subsequent attempt to apply the MCU to the processor.

Example 10. A processor comprising: a memory to store an extended service microcode update (MCU); one or more registers to store processor identification data and processor extended service data; execution circuitry to execute instructions to: read an MCU extended service value from the MCU, the MCU extended service value identified based on the processor identification data; and determine whether to apply the extended service MCU on the processor based on a comparison between the MCU extended service value and the processor extended service data.

Example 11. The processor of example 10 wherein the processor identification data comprises processor signature data and platform identification data.

Example 12. The processor of examples 10 or 11 wherein identifying the MCU extended service value comprises: identifying an entry in an MCU data structure corresponding to the processor signature data; and identifying a field within the entry based on the platform identification data, the field encoding the MCU extended service value.

Example 13. The processor of examples 10-12 wherein the platform identification data comprises N bits read from a processor register, wherein identifying a field comprises using the N bits to identify a processor flag of 2^{N} processor flags, the processor flag associated with the field.

Example 14. The processor of any of examples 10-13 wherein the processor signature data comprises data indicating one or more of: an extended family, an extended model, a type, a family, a model, and a stepping.

Example 15. The processor of any of examples 10-14 wherein the extended service MCU is applied to the processor if the MCU extended service value is less than or equal to a value of the processor extended service data.

Example 16. The processor of any of examples 10-15 wherein the extended service MCU is applied to the processor by writing to a microcode patch memory of a microsequencer of the processor.

Example 17. A machine-readable medium that stores code that when executed by a processor causes the processor to perform a method comprising: storing extended service microcode update (MCU) in a memory; reading processor identification data and processor extended service data from one or more registers of the processor; identifying an MCU extended service value of the MCU based on the processor identification data; and determining whether to apply the extended service MCU on the processor based on a comparison between the MCU extended service value and the processor extended service data.

Example 18. The machine-readable medium of example 17 wherein the processor identification data comprises processor signature data and platform identification data.

Example 19. The machine-readable medium of any of examples 18-20 wherein identifying the MCU extended service value comprises: identifying an entry in an MCU data structure corresponding to the processor signature data; and identifying a field within the entry based on the platform identification data, the field encoding the MCU extended service value.

Example 20. The machine-readable medium of any examples of 17-19 wherein the platform identification data comprises N bits read from a processor register, wherein identifying a field comprises using the N bits to identify a processor flag of 2^{N} processor flags, the processor flag associated with the field.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

## Claims

1. A method comprising:
loading (2901) an extended service microcode update ,MCU, (2410) to a memory (2408) of a processor (2490);
reading (2905) processor identification data and processor extended service data (2424) from one or more registers (2620) of the processor (2490);
identifying (2906) in the MCU (2410) an MCU extended service value based on the processor identification data (2624); and
determining (2907) whether to apply the extended service MCU (2410) on the processor (2490) based on a comparison between the MCU (2410) extended service value and the processor extended service data (2410), wherein the processor identification data (2624) comprises processor signature data and platform identification data (2624), and
wherein identifying (2906) the MCU extended service value (2410) comprises:
identifying (2906) an entry in an MCU data structure corresponding to the processor signature data; and
identifying (2906) a field within the entry based on the platform identification data (2624), the field encoding the MCU extended service value (2410).

2. The method of claim 1 wherein the platform identification data (2624) comprises N bits read from a processor register, wherein identifying a field comprises using the N bits to identify a processor flag of 2^{N} processor flags, the processor flag associated with the field.

3. The method of any of claims 1 to 2 wherein the processor signature data comprises data indicating one or more of: an extended family, an extended model, a type, a family, a model, and a stepping.

4. The method of any of claims 1 to 3 wherein the extended service MCU (2410) is applied to the processor (2490) if the MCU extended service value is less than or equal to a value of the processor extended service data.

5. The method of claim 4 wherein the extended service MCU is applied (2908) to the processor (2490) by writing to a microcode patch memory of a microsequencer (2402) of the processor.

6. The method of any of claims 1 to 5 wherein the value of the processor extended service data comprises an M-bit value read from a processor register and the MCU extended service value comprises an M-bit value read from a header of the MCU.

7. The method of any of claims 1 to 6 wherein responsive to a purchase of an extended license for the processor (2490), the processor extended service data is to be updated to include an updated value, the updated value to be compared with the MCU extended service value in a subsequent attempt to apply the MCU to the processor (2490).

8. A processor (2490) comprising:
a memory (2408) to store an extended service microcode update ,MCU, (2410);
one or more registers (2402, 2424, 2624) to store processor identification data and processor extended service data (2424);
execution circuitry to execute instructions to:
read an MCU extended service value (2410) from the MCU, the MCU extended service value (2410) identified based on the processor identification data; and
determine whether to apply the extended service MCU (2410) on the processor (2490) based on a comparison between the MCU extended service (2410) value and the processor extended service data, wherein the processor identification data comprises processor signature data and platform identification data, and
wherein identifying the MCU extended service value (2410) comprises:
identifying an entry in an MCU data structure corresponding to the processor signature data; and
identifying a field within the entry based on the platform identification data (2624), the field encoding the MCU extended service value (2410).

9. The processor (2490) of claim 8 wherein the platform identification data (2424) comprises N bits read from a processor register, wherein identifying a field comprises using the N bits to identify a processor flag of 2^{N} processor flags, the processor flag associated with the field.

10. The processor (2490) of any of claims 8 to 9 wherein the processor signature data comprises data indicating one or more of: an extended family, an extended model, a type, a family, a model, and a stepping.

11. A machine-readable medium that stores code that when executed by a processor causes the processor to perform a method comprising:
storing extended service microcode update ,MCU, (2410) in a memory (2408);
reading processor identification data and processor extended service data from one or more registers (2402, 2424, 2624) of the processor (2490);
identifying an MCU extended service value (2410) of the MCU based on the processor identification data; and
determining whether to apply the extended service MCU (2410) on the processor (2490) based on a comparison between the MCU extended service value and the processor extended service data, wherein the processor identification data comprises processor signature data and platform identification data (2624), and
wherein identifying the MCU extended service value (2410) comprises:
identifying an entry in an MCU data structure corresponding to the processor signature data; and
identifying a field within the entry based on the platform identification data, the field encoding the MCU extended service value.

## Patentansprüche

1. Verfahren, das Folgendes umfasst:
Laden (2901) einer Mikrocode-Aktualisierung, MCU, (2410) für einen erweiterten Service in einen Speicher (2408) eines Prozessors (2490);
Lesen (2905) von Prozessoridentifikationsdaten und Prozessor-Daten (2424) für einen erweiterten Service aus einem oder mehreren Registern (2620) des Prozessors (2490);
Identifizieren (2906) eines MCU-Werts für einen erweiterten Service in der MCU (2410) basierend auf den Prozessoridentifikationsdaten (2624); und
Bestimmen (2907), ob die MCU (2410) für einen erweiterten Service auf den Prozessor (2490) anzuwenden ist, basierend auf einem Vergleich zwischen dem Wert der MCU (2410) für einen erweiterten Service und den Prozessor-Daten (2410) für einen erweiterten Service, wobei die Prozessoridentifikationsdaten (2624) Prozessorsignaturdaten und Plattformidentifikationsdaten (2624) umfassen, und
wobei das Identifizieren (2906) des MCU-Werts (2410) für einen erweiterten Service Folgendes umfasst:
Identifizieren (2906) eines den Prozessorsignaturdaten entsprechenden Eintrags in einer MCU-Datenstruktur; und
Identifizieren (2906) eines Felds innerhalb des Eintrags basierend auf den Plattformidentifikationsdaten (2624), wobei das Feld den MCU-Wert (2410) für einen erweiterten Service codiert.

2. Verfahren nach Anspruch 1, wobei die Plattformidentifikationsdaten (2624) N Bits umfassen, die aus einem Prozessorregister gelesen werden, wobei das Identifizieren eines Felds das Verwenden der N Bits umfasst, um ein Prozessorflag von 2^{N} Prozessorflags zu identifizieren, wobei das Prozessorflag dem Feld zugeordnet ist.

3. Verfahren nach einem der Ansprüche 1 bis 2, wobei die Prozessorsignaturdaten Daten umfassen, die eines oder mehrere von Folgendem angeben: einer erweiterten Familie, einem erweiterten Modell, einem Typ, einer Familie, einem Modell und einem Stepping.

4. Verfahren nach einem der Ansprüche 1 bis 3, wobei die MCU (2410) für einen erweiterten Service auf den Prozessor (2490) angewendet wird, wenn der MCU-Wert für einen erweiterten Service kleiner als oder gleich einem Wert der Prozessor-Daten für einen erweiterten Service ist.

5. Verfahren nach Anspruch 4, wobei die MCU für einen erweiterten Service auf den Prozessor (2490) angewendet wird (2908), indem ein Mikrocode-Patch-Speicher eines Mikrosequenzers (2402) des Prozessors beschrieben wird.

6. Verfahren nach einem der Ansprüche 1 bis 5, wobei der Wert der Prozessor-Daten für einen erweiterten Service einen aus einem Prozessorregister gelesenen M-Bit-Wert umfasst und der MCU-Wert für einen erweiterten Service einen aus einem Header der MCU gelesenen M-BitWert umfasst.

7. Verfahren nach einem der Ansprüche 1 bis 6, wobei die Prozessor-Daten für einen erweiterten Service als Reaktion auf einen Erwerb einer erweiterten Lizenz für den Prozessor (2490) zu aktualisieren sind, sodass sie einen aktualisierten Wert aufweisen, wobei der aktualisierte Wert bei einem nachfolgenden Versuch, die MCU auf den Prozessor (2490) anzuwenden, mit dem MCU-Wert für einen erweiterten Service zu vergleichen ist.

8. Prozessor (2490), der Folgendes umfasst:
einen Speicher (2408) zum Speichern einer Mikrocode-Aktualisierung, MCU, (2410) für einen erweiterten Service;
ein oder mehrere Register (2402, 2424, 2624) zum Speichern von Prozessoridentifikationsdaten und Prozessor-Daten (2424) für einen erweiterten Service;
eine Ausführungsschaltungsanordnung zum Ausführen von Anweisungen zu Folgendem:
Lesen eines MCU-Werts (2410) für einen erweiterten Service aus der MCU, wobei der MCU-Wert (2410) für einen erweiterten Service basierend auf den Prozessoridentifikationsdaten identifiziert wird; und
Bestimmen, ob die MCU (2410) für einen erweiterten Service auf den Prozessor (2490) anzuwenden ist, basierend auf einem Vergleich zwischen dem MCU-Wert für einen erweiterten Service (2410) und den Prozessor-Daten für einen erweiterten Service, wobei die Prozessoridentifikationsdaten Prozessorsignaturdaten und Plattformidentifikationsdaten umfassen, und
wobei das Identifizieren des MCU-Werts (2410) für einen erweiterten Service Folgendes umfasst:
Identifizieren eines den Prozessorsignaturdaten entsprechenden Eintrags in einer MCU-Datenstruktur; und
Identifizieren eines Felds innerhalb des Eintrags basierend auf den Plattformidentifikationsdaten (2624), wobei das Feld den MCU-Wert (2410) für einen erweiterten Service codiert.

9. Prozessor (2490) nach Anspruch 8, wobei die Plattformidentifikationsdaten (2424) N Bits umfassen, die aus einem Prozessorregister gelesen werden, wobei das Identifizieren eines Felds das Verwenden der N Bits umfasst, um ein Prozessorflag von 2^{N} Prozessorflags zu identifizieren, wobei das Prozessorflag dem Feld zugeordnet ist.

10. Prozessor (2490) nach einem der Ansprüche 8 bis 9, wobei die Prozessorsignaturdaten Daten umfassen, die eines oder mehrere von Folgendem angeben: einer erweiterten Familie, einem erweiterten Modell, einem Typ, einer Familie, einem Modell und einem Stepping.

11. Maschinenlesbares Medium, das Code speichert, der, wenn er von einem Prozessor ausgeführt wird, bewirkt, dass der Prozessor ein Verfahren durchführt, das Folgendes umfasst:
Speichern einer Mikrocode-Aktualisierung, MCU, (2410) für einen erweiterten Service in einem Speicher (2408);
Lesen von Prozessoridentifikationsdaten und Prozessor-Daten für einen erweiterten Service aus einem oder mehreren Registern (2402, 2424, 2624) des Prozessors (2490);
Identifizieren eines MCU-Werts (2410) für einen erweiterten Service der MCU basierend auf den Prozessoridentifikationsdaten; und
Bestimmen, ob die MCU (2410) für einen erweiterten Service auf den Prozessor (2490) anzuwenden ist, basierend auf einem Vergleich zwischen dem MCU-Wert für einen erweiterten Service und den Prozessor-Daten für einen erweiterten Service, wobei die Prozessoridentifikationsdaten Prozessorsignaturdaten und Plattformidentifikationsdaten (2624) umfassen, und
wobei das Identifizieren des MCU-Werts (2410) für einen erweiterten Service Folgendes umfasst:
Identifizieren eines den Prozessorsignaturdaten entsprechenden Eintrags in einer MCU-Datenstruktur; und
Identifizieren eines Felds innerhalb des Eintrags basierend auf den Plattformidentifikationsdaten, wobei das Feld den MCU-Wert für einen erweiterten Service codiert.

## Revendications

1. Procédé comprenant les étapes suivantes :
charger (2901) une mise à jour de microcode de service étendu, MCU, (2410) dans une mémoire (2408) d'un processeur (2490) ;
lire (2905) des données d'identification de processeur et des données de service étendu de processeur (2424) depuis un ou plusieurs registres (2620) du processeur (2490) ;
identifier (2906), dans la MCU (2410), une valeur de service étendu de MCU sur la base des données d'identification de processeur (2624) ; et
déterminer (2907) s'il convient d'appliquer la MCU de service étendu (2410) sur le processeur (2490) sur la base d'une comparaison entre la valeur de service étendu de MCU (2410) et les données de service étendu de processeur (2410), les données d'identification de processeur (2624) comprenant des données de signature de processeur et des données d'identification de plate-forme (2624), et
où l'identification (2906) de la valeur de service étendu de MCU (2410) comprend les étapes suivantes :
identifier (2906) une entrée dans une structure de données de MCU correspondant aux données de signature du processeur ; et
identifier (2906) un champ dans l'entrée sur la base des données d'identification de plate-forme (2624), le champ codant la valeur de service étendu de MCU (2410).

2. Procédé selon la revendication 1, dans lequel les données d'identification de plate-forme (2624) comprennent N bits lus à partir d'un registre de processeur, dans lequel l'identification d'un champ comprend l'utilisation des N bits pour identifier un drapeau de processeur de 2^{N} drapeaux de processeur, le drapeau de processeur étant associé au champ.

3. Procédé selon l'une quelconque des revendications 1 et 2, dans lequel les données de signature de processeur comprennent des données indiquant un ou plusieurs des éléments suivants : une famille étendue, un modèle étendu, un type, une famille, un modèle et un pas.

4. Procédé selon l'une quelconque des revendications 1 à 3, dans lequel la MCU de service étendu (2410) est appliquée au processeur (2490) si la valeur de service étendu de MCU est inférieure ou égale à une valeur des données de service étendu de processeur.

5. Procédé selon la revendication 4, dans lequel la MCU de service étendu est appliquée (2908) au processeur (2490) par écriture dans une mémoire de patch de microcode d'un microséquenceur (2402) du processeur.

6. Procédé selon l'une quelconque des revendications 1 à 5, dans lequel la valeur des données de service étendu de processeur comprend une valeur de M bits lue dans un registre de processeur et la valeur de service étendu de MCU comprend une valeur de M bits lue dans un en-tête de MCU.

7. Procédé selon l'une quelconque des revendications 1 à 6, dans lequel, en réponse à l'achat d'une licence étendue pour le processeur (2490), les données de service étendu du processeur doivent être mises à jour pour inclure une valeur mise à jour, la valeur mise à jour devant être comparée à la valeur de service étendu de MCU dans une tentative ultérieure d'application de la MCU au processeur (2490).

8. Processeur (2490) comprenant :
une mémoire (2408) pour stocker une mise à jour de microcode de service étendu, MCU, (2410) ;
un ou plusieurs registres (2402, 2424, 2624) pour stocker des données d'identification de processeur et des données de service étendu de processeur (2424) ;
des circuits d'exécution pour exécuter des instructions afin de :
lire une valeur de service étendu de MCU (2410) à partir de la MCU, la valeur de service étendu de MCU (2410) étant identifiée sur la base des données d'identification du processeur ; et
déterminer s'il convient d'appliquer la MCU de service étendu (2410) sur le processeur (2490) sur la base d'une comparaison entre la valeur de service étendu de MCU (2410) et les données de service étendu du processeur, les données d'identification du processeur comprenant des données de signature du processeur et des données d'identification de plate-forme, et
où l'identification de la valeur de service étendu de MCU (2410) comprend les étapes suivantes :
identifier une entrée dans une structure de données de MCU correspondant aux données de signature du processeur ; et
identifier un champ dans l'entrée sur la base des données d'identification de plate-forme (2624), le champ codant la valeur de service étendu de MCU (2410).

9. Processeur (2490) selon la revendication 8, dans lequel les données d'identification de plate-forme (2424) comprennent N bits lus à partir d'un registre de processeur, dans lequel l'identification d'un champ comprend l'utilisation des N bits pour identifier un drapeau de processeur de 2^{N} drapeaux de processeur, le drapeau de processeur étant associé au champ.

10. Processeur (2490) selon l'une quelconque des revendications 8 et 9, dans lequel les données de signature de processeur comprennent des données indiquant un ou plusieurs des éléments suivants : une famille étendue, un modèle étendu, un type, une famille, un modèle et un pas.

11. Support lisible par machine qui stocke un code qui, lorsqu'il est exécuté par un processeur, amène le processeur à exécuter un procédé comprenant les étapes suivantes :
stocker une mise à jour de microcode de service étendu, MCU, (2410), dans une mémoire (2408) ;
lire des données d'identification de processeur et des données de service étendu de processeur depuis un ou plusieurs registres (2402, 2424, 2624) du processeur (2490) ;
identifier une valeur de service étendu de MCU (2410) de la MCU sur la base des données d'identification du processeur ; et
déterminer s'il convient d'appliquer la MCU de service étendu (2410) sur le processeur (2490) sur la base d'une comparaison entre la valeur de service étendu de MCU et les données de service étendu du processeur, les données d'identification du processeur comprenant des données de signature du processeur et des données d'identification de plate-forme (2624), et
où l'identification de la valeur de service étendu de MCU (2410) comprend les étapes suivantes :
identifier une entrée dans une structure de données de MCU correspondant aux données de signature du processeur ; et
identifier un champ dans l'entrée sur la base des données d'identification de plate-forme, le champ codant la valeur de service étendu de MCU.
